(19) Europäisches Patentamt
European Patent Office
Office européen des brevets

(11) **EP 2 208 760 A1**

(12) **EUROPEAN PATENT APPLICATION**
published in accordance with Art. 153(4) EPC


(43) Date of publication:
**21.07.2010 Bulletin 2010/29**

(21) Application number: **08844422.9**

(22) Date of filing: **23.10.2008**

(51) Int Cl.:
***C08L 75/14*** (2006.01) ***B32B 27/40*** (2006.01)
***C08G 18/67*** (2006.01) ***C08K 3/10*** (2006.01)
***C08K 3/32*** (2006.01) ***C08K 5/13*** (2006.01)
***C09D 11/10*** (2006.01)

(86) International application number:
**PCT/JP2008/069194**

(87) International publication number:
**WO 2009/057497 (07.05.2009 Gazette 2009/19)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **01.11.2007 JP 2007285464**



(71) Applicant: **Kuraray Co., Ltd.**
**Kurashiki-shi**
**Okayama 710-0801 (JP)**

(72) Inventors:
- **SAITO, Hidekazu**
**Kamisu-shi**
**Ibaraki 314-0197 (JP)**
- **KIMURA, Hiroki**
**Kamisu-shi**
**Ibaraki 314-0197 (JP)**

(74) Representative: **Müller-Boré & Partner**
**Patentanwälte**
**Grafinger Strasse 2**
**81671 München (DE)**


(54) **POLYURETHANE COMPOSITION**


(57) [Problem] Provided are a nonadhesive polyurethane composition, which does not adhere to a molding apparatus and the like, is superior in melt-moldability and adhesion to silicone, and useful as a molded object, a composite molded object or an ink binder, and a molded object, a composite molded object, an ink binder and an ink composition, which are made therefrom.

[Solving Means] A polyurethane composition containing' polyurethane (A) containing, in a molecule, a structural unit (I) represented by the following formula (I);

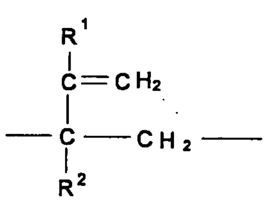

(I)

wherein $R^1$ and $R^2$ are each a hydrogen atom or a C1-6 alkyl group, in a proportion of 0.1 - 20 mass%, and metal compound (B) selected from an organic Zn compound, an organic Bi compound, an organic Ti compound and an organic Zr compound in a proportion of 0.1 - 2,000 ppm, a molded object comprised of the polyurethane composition, a composite molded object having a polyurethane composition layer and a silicone layer, an ink binder containing the polyurethane composition and an ink composition containing the polyurethane composition.


EP 2 208 760 A1

**Description**

Technical Field

The present invention relates to a polyurethane composition and a production method thereof, a molded object comprised of the polyurethane composition, a composite molded object formed by using the polyurethane composition and a production method thereof, and an ink binder comprising the polyurethane composition and an ink composition containing the ink binder.

Background Art

Polyurethane is superior in mechanical properties, abrasion resistance, oil resistance and the like. Among polyurethane, thermoplastic polyurethane is also particularly superior in, in addition to the aforementioned properties, elastic recovery property, bendability and the like, and permits melt molding. Therefore, it is used for a broad range of application.
However, polyurethane has extremely strong tackiness. For example, when a molded object is produced by injection molding, problems easily occur such as failure in release from a mold, defective appearance of molded objects due to flowing spots of resin in a mold (e.g., development of air bubbles and flow marks, etc.), hang-up between molded objects obtained by molding and the like. In addition, for example, when a film or sheet is produced by extrusion molding of polyurethane, winding thereof alone is difficult due to the strong tackiness it has. Thus, a release agent or release paper (release sheet) needs to be used simultaneously. When the film or sheet is wound alone without using the release agent or release paper, unwinding thereof becomes difficult or impossible to the extent that the film or sheet cannot be used. Moreover, polyurethane is inferior in hot water resistance and weather resistance.
Therefore, even though polyurethane has various superior properties mentioned above, the range of use and application thereof are currently limited.
On the other hand, since silicone is superior in release property, heat resistance, cold resistance and weather resistance, and further, in water repellency and electrical insulating property, and shows stable properties over a broad temperature range, it is used in various fields, taking advantage of such properties. However, silicone is inferior in mechanical properties such as tensile strength at break and the like, and abrasion resistance and the like. Moreover, since silicone is inferior in adhesion to other materials, its range of use is limited.
In recent years, therefore, a polyurethane/silicone composite molded object has been developed, which compensates for the defects of both polyurethane and silicone, and has the superior properties of the both. For example, it has been used as a key sheet (keypad) to be used as a push-button switch on cell phones, home electric appliances, automobile parts, communication devices and the like, a roll to be used for electrophotographic copiers, printers etc., and the like. However, since the adhesive strength between silicone and polyurethane is low, the surface of a polyurethane molded object and/or the surface of a silicone molded object need to be subjected to an activation treatment in advance to improve the adhesiveness between them. Examples of the activation treatment method of the surface of a polyurethane molded object and the surface of a silicone molded object include a primer treatment, a corona discharge treatment, a plasma treatment, an ozone treatment, a flame treatment and the like. All of these treatments need to be performed separately as a "pretreatment", which constitutes a factor that lowers the work efficiency.
From the above-mentioned aspects, studies have been made of polyurethane materials which adhere to silicone even without a pretreatment. As such prior arts, a coating agent to be applied to a silicone rubber substrate, which comprises polyurethane having an unsaturated aliphatic group in a molecule, which is produced using an organotin compound catalyst and the like, organohydrogenpolysiloxane having a hydrosilyl group and a hydrosilylation catalyst (patent documents 1 and 2), and an over coating agent to be applied to a silicone rubber substrate, which comprises, as a main component, a urethane resin having a weight-average molecular weight of 10,000 - 500,000 obtained by reacting a linear polymer having a hydroxyl group or an amino group at the both terminals and a difunctional isocyanate compound at a molar ratio of the former: the latter exceeding 1.0 (patent document 3) are known.
However, these coating agents (coating materials) are still insufficient in the adhesion to silicone, and even when these coating agents (coating materials) are applied on silicone rubber substrates, a composite molded object having superior properties of both polyurethane and silicone cannot be obtained.
In addition, a method of producing a composite molded object wherein a silicone rubber layer and a thermoplastic resin layer are integrally laminated is known, which comprises primary injection molding of a thermoplastic resin such as polycarbonate, polypropylene, poly(butylene terephthalate) and the like in a mold cavity, secondary injection molding of an addition-curable silicone rubber composition on the thermoplastic resin layer formed in the cavity, along with which the silicone rubber composition is cured at a temperature not less than the softening point and less than the melting point of the thermoplastic resin (patent document 4). However, even when this method is applied to the production of a composite molded object of polyurethane and silicone rubber, a composite molded object wherein the polyurethane

layer and the silicone rubber layer are adhered finely cannot be obtained.

Moreover, letters and the like are frequently printed with silicone rubber-containing ink on a key top of a silicone rubber keypad on cell phones, various remote controls and the like. However, silicone rubber-containing ink is inferior in the properties such as abrasion resistance, strength, oil resistance, water resistance, salt resistance and the like. During the course of use, therefore, problems easily occur in that printed letters and the like become difficult to read due to abrasion, and contact failure and the like are easily developed due to penetration of oil, salt, water and the like. From such aspects, an ink binder and ink, which are superior in adhesion to silicone rubbers, and also in properties such as abrasion resistance, strength, oil resistance, water resistance and the like, are desired.

patent document 1: JP-A-2001-26648
patent document 2: JP-A-2002-206071
patent document 3: JP-A-2001-26748
patent document 4: JP-A-8-174604

Disclosure of the Invention

Problems to be Solved by the Invention

An object of the present invention is to provide a polyurethane composition, which is non-tacky, superior in handling properties and melt-moldability, and further in mechanical properties such as abrasion resistance, tensile strength at break, tensile elongation at break, surface strength and the like, water resistance, oil resistance, elastic recovery property and the like, superior in adhesion to silicone even without a previous surface activation treatment (primer treatment etc.) even though the composition is non-tacky, and further superior in adhesion to polymers such as polyurethane, polyester, nylon and the like, and other materials such as paper, cloth, lumber and the like, can smoothly produce various molded objects, composite molded objects and the like, and is effective as an ink binder, and a production method thereof, a molded object comprised of the polyurethane composition, a composite molded object formed by using the polyurethane composition and a production method thereof, and an ink binder comprising the polyurethane composition and an ink composition containing the ink binder. Means of Solving the Problems

The present inventors have conducted intensive studies in an attempt to achieve the aforementioned objects. As a result, they have found that when a polyurethane having an unsaturated aliphatic hydrocarbon group in a molecule is produced by using at least one kind of metal compound selected from an organozinc compound, an organobismuth compound, an organotitanium compound and an organozirconium compound in the production of polyurethane, instead of an organotin compound (e.g., dibutyltin diacetate, dibutyltin dilaurate etc.), tertiary amine and the like, which are conventionally used widely as a urethanization reaction catalyst, the resulting polyurethane composition containing at least one kind of metal compound selected from an organozinc compound, an organobismuth compound, an organotitanium compound and an organozirconium compound is non-tacky, superior in handling properties and melt-moldability, and can smoothly produce various molded objects according to injection molding, extrusion molding and other molding methods; and that a molded objet obtained by using the polyurethane composition is superior in mechanical properties represented by abrasion resistance, tensile strength at break, tensile elongation at break and the like, and futher in water resistance, bendability, oil resistance, elastic recovery property and the like, shows small permanent set, and can be effectively used for various applications.

In addition, the present inventors have found that the aforementioned polyurethane composition after the polyurethane formation reaction, which further contains at least one of a phosphorus compound and a phenolic compound, shows further-improved processing stability and durability (water resistance, heat resistance, weather resistance etc.).

Furthermore, the present inventors have found that the non-tacky polyurethane composition obtained above is superior in adhesion to silicone, strongly adheres to silicone even without a surface activation treatment (primer treatment etc.) in advance, and can smoothly produce a composite molded object having a polyurethane layer and a silicone layer. Particularly, they have found that a composite molded object wherein a polyurethane composition layer and a silicone layer are strongly adhered and laminated can be obtained by, in the production of a composite molded object with silicone, curing a curable silicone composition containing organohydrogenpolysiloxane having a hydrogen atom bonded to a silicon atom and a hydrosilylation catalyst, or a curable silicone composition containing organohydrogenpolysiloxane having a hydrogen atom bonded to a silicon atom, organopolysiloxane having an alkenyl group and a hydrosilylation catalyst on a layer comprised of the aforementioned polyurethane composition.

In addition, the present inventors have found that the aforementioned polyurethane composition is superior in mechanical properties such as abrasion resistance, tensile strength at break, tensile elongation at break, surface strength and the like, water resistance, oil resistance, elastic recovery property and the like, superior in adhesion to silicone even without a previous surface activation treatment (primer treatment etc.) even though the composition is non-tacky, and

further superior in adhesion to polymers such as polyurethane, polyester, nylon and the like, and other materials such as paper, cloth, lumber and the like, and is also effective as an ink binder or an ink composition, particularly as an ink composition to be applied to a silicone layer. Based on such various findings, they have completed the present invention.

Accordingly, the present invention is

(1) a polyurethane composition comprising polyurethane (A) comprising, in a molecule, a structural unit (I) represented by the following formula (I);

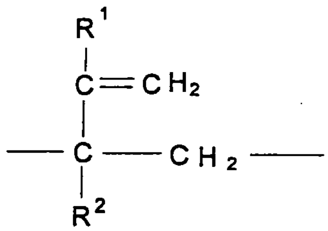

(I)

wherein $R^1$ and $R^2$ are each independently a hydrogen atom or an alkyl group having a carbon number of 1 - 6, in a proportion of 0.1 - 20 mass% based on the mass of polyurethane, and at least one kind of metal compound (B) selected from an organozinc compound, an organobismuth compound, an organotitanium compound and an organozirconium compound, wherein the content of metal compound (B) is 0.1 - 2,000 ppm based on the mass of polyurethane (A).

In addition, the present invention is

(2) the polyurethane composition of the aforementioned (1), further comprising at least one kind of compound (C) selected from a phosphorus compound and a phenolic compound in a proportion of 1 - 20,000 ppm based on the mass of polyurethane (A); and,
(3) the polyurethane composition of the aforementioned (1) or (2), which does not contain an organotin compound and tertiary amines.

Furthermore, the present invention is

(4) the polyurethane composition of any of the aforementioned (1) - (3), wherein polyurethane (A)' is at least one kind of polyurethane selected from

· polyurethane (Al) containing structural unit (I) in a proportion of 0.1 - 20 mass% based on the mass of polyurethane, which is formed by reacting polymer polyol ($a_p$) containing, at least as a part of the polymer polyol component, polymer polyol ($a_p$-1) containing structural unit (I) represented by the above-mentioned formula (I) in a molecule with organic polyisocyanate (b); and
· polyurethane (A2) containing structural unit (I) in a proportion of 0.1 - 20 mass% based on the mass of polyurethane, which is formed by reacting polymer polyol ($a_p$) containing, at least as a part of the polymer polyol component, polymer polyol ($a_p$-1) containing structural unit (I) represented by the above-mentioned formula (I) in a molecule with organic polyisocyanate (b) and a chain extender (c);

(5) the polyurethane composition of the aforementioned (4), wherein the polymer polyol ($a_p$-1) is polyolefin polyol;
(6) the polyurethane composition of the aforementioned (4) or (5), wherein the polymer polyol ($a_p$-1) is at least one kind selected from polybutadiene polyol, polyisoprene polyol and butadiene/isoprene copolymer polyol;
(7) the polyurethane composition of any of the aforementioned (1) - (6), wherein polyurethane (A) has a nitrogen atom content of 1 - 6 mass%; and
(8) the polyurethane composition of any of the aforementioned (1) - (7), wherein polyurethane (A) has an inherent viscosity of 0.5 - 1.5 dl/g.

In addition, the present invention is

(9) a production method of the polyurethane composition of the aforementioned (1), comprising reacting polymer polyol ($a_p$) comprising polymer polyol ($a_p$-1) having, in a molecule, a structural unit (I) represented by the following

formula (I);

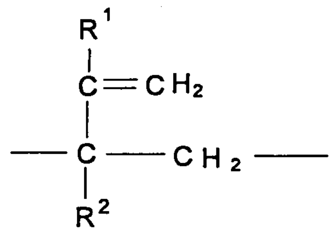

(I)

wherein $R^1$ and $R^2$ are each independently a hydrogen atom or an alkyl group having a carbon number of 1 - 6, at least as a part of the polymer polyol component, with organic polyisocyanate (b) using or without using a chain extender (c), in the presence of at least one kind of metal compound (B) selected from an organozinc compound, an organobismuth compound, an organotitanium compound and an organozirconium compound in a proportion of 0.1 - 2,000 ppm based on the total mass of polymer polyol ($a_p$) and organic polyisocyanate (b), or the total mass of polymer polyol ($a_p$), organic polyisocyanate (b) and chain extender (c).

Furthermore, the present invention is

(10) the production method of the aforementioned (9), wherein the polyurethane formation reaction is performed in the absence of an organotin compound and tertiary amines; and

(11) the production method of the aforementioned (9) or (10), wherein compound (C) which is at least one kind selected from a phosphorus compound and a phenolic compound is added at a proportion of 1 - 20,000 ppm based on the mass of polyurethane after the polyurethane formation reaction.

Moreover, the present invention is

(12) a molded object comprised of the polyurethane composition of any of the aforementioned (1) - (8).

Furthermore, the present invention is

(13) a composite molded object comprising a layer comprising the polyurethane composition of any of the aforementioned (1) - (8) and a silicone layer laminated thereon;

(14) the composite molded object of the aforementioned (13), wherein the silicone layer is formed by curing a curable silicone composition on the layer comprising the polyurethane composition;

(15) the composite molded object of the aforementioned (14), wherein the curable silicone composition is a curable silicone composition comprising organohydrogenpolysiloxane having a hydrogen atom bonded to a silicon atom and a hydrosilylation catalyst, or a curable silicone composition comprising organohydrogenpolysiloxane having a hydrogen atom bonded to a silicon atom, organopolysiloxane having an alkenyl group and a hydrosilylation catalyst; and,

(16) a production method of a composite molded object wherein a silicone layer is laminated on a layer comprised of a polyurethane composition, comprising applying a curable silicone composition containing organohydrogenpolysiloxane having a hydrogen atom bonded to a silicon atom and a hydrosilylation catalyst onto a layer comprising the polyurethane composition of any of the aforementioned (1) - (8) to form continuous layers or discontinuous layers, or applying a curable silicone composition containing organohydrogenpolysiloxane having a hydrogen atom bonded to a silicon atom, organopolysiloxane having an alkenyl group and a hydrosilylation catalyst onto a layer comprising the polyurethane composition of any of the aforementioned (1) - (8) to form continuous layers or discontinuous layers, and curing the curable silicone composition on the layer comprising the polyurethane composition.

Moreover, the present invention is

(17) an ink binder comprising the polyurethane composition of any of the aforementioned (1) - (8);

(18) the ink binder of the aforementioned (17), wherein polyurethane (A) has an amine value per 1 g thereof of not more than 0.5 KOH mg/g; and,

(19) an ink composition comprising the ink binder of the aforementioned (17) or (18).

Effect of the Invention

The polyurethane composition of the present invention comprising polyurethane (A) having structural unit (I) represented by the above-mentioned formula (I) in an amount defined in the present invention, and at least one kind of metal compound (B) selected from an organozinc compound, an organobismuth compound, an organotitanium compound and an organozirconium compound in an amount defined in the present invention is non-tacky, does not adhere to molding equipments, mold and the like, is superior in handling properties, and superior in melt-moldability, and can produce various molded objects having superior appearance smoothly and at high producibility according to any molding method such as injection molding, extrusion molding, inflation molding, blow molding, calender molding, press molding, casting and the like.
A molded object obtained by using the polyurethane composition of the present invention is superior in, in addition to the mechanical properties represented by abrasion resistance, tensile strength at break, tensile elongation at break and the like, water resistance, bendability, oil resistance, elastic recovery property and the like, shows a small permanent set, and can be effectively used for various applications.
The polyurethane composition of the present invention further comprising at least one kind of compound (C) selected from a phosphorus compound and a phenolic compound is superior in processing stability of the polyurethane composition, and a molded object obtained from the polyurethane composition is still more superior in durability (water resistance, heat resistance, weather resistance etc.).

Although the polyurethane composition of the present invention is non-tacky, it is superior in adhesion to silicone, strongly adheres to silicone even without a surface activation treatment (primer treatment etc.) in advance, and can smoothly produce a composite molded object having a polyurethane layer and a silicone layer.
According to the production method of the present invention comprising curing a curable silicone composition containing organohydrogenpolysiloxane having a hydrogen atom bonded to a silicon atom and a hydrosilylation catalyst, or a curable silicone composition containing organohydrogenpolysiloxane having a hydrogen atom bonded to a silicon atom, organopolysiloxane having an alkenyl group and a hydrosilylation catalyst on a layer (substrate) comprised of the aforementioned polyurethane composition, the aforementioned composite molded object wherein the polyurethane composition layer and the silicone layer are strongly adhered and laminated can be smoothly produced.

An ink binder and an ink composition comprising the polyurethane composition of the present invention are non-tacky, superior in mechanical properties such as abrasion resistance, tensile strength at break, tensile elongation at break, surface strength and the like, water resistance, oil resistance, elastic recovery property and the like, superior in adhesion to silicone even without a previous surface activation treatment (primer treatment etc.) even though they are non-tacky, and further superior in adhesion to a substrate comprised of other materials such as polymers (e.g., polyurethane, polyester, nylon and the like), and other materials such as paper, cloth, lumber and the like. The letters and patterns printed using the ink composition of the present invention on a silicone substrate or other substrate are not subject to easy detachment from the substrate, or deterioration of letters and patterns due to abrasion, oil, water, salt and the like and, when printed on a keypad of a cell phone or remote control, they are free of contact failure and the like due to penetration of oil, salt, water etc., and' the like.

Best Mode for Carrying out the Invention

The present invention is explained in detail in the following.
Polyurethane (A) to be the base of the polyurethane composition of the present invention has, in a polyurethane molecule, structural unit (I) represented by the following formula (I);

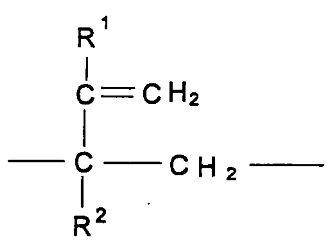

(I)

wherein $R^1$ and $R^2$ are each independently a hydrogen atom or an alkyl group having a carbon number of 1 - 6, to which a vinyl group or an alkyl-substituted vinyl group is bonded.

In the above-mentioned formula (I), $R^1$ and $R^2$ are each independently a hydrogen atom or an alkyl group having a carbon number of 1 - 6, or both $R^1$ and $R^2$ may be hydrogen atoms, or one may be a hydrogen atom and the

other may be an alkyl group, or both may be alkyl groups.
Specific examples of $R^1$ include a hydrogen atom, a methyl group, an ethyl group, an n-propyl group, an isopropyl group, an n-butyl group, a t-butyl group, an n-pentyl group, a cyclopentyl group, an n-hexyl group, a cyclohexyl group and the like, and $R^1$ is preferably a hydrogen atom, a methyl group or an ethyl group.
In addition, specific examples of $R^2$ include a hydrogen atom, a methyl group, an ethyl group, an n-propyl group, an isopropyl group, an n-butyl group, a t-butyl group, an n-pentyl group, a cyclopentyl group, an n-hexyl group, a cyclohexyl group and the like, and $R^2$ is preferably a hydrogen atom, a methyl group or an ethyl group.
Unlimitatively, specific examples of the structural unit (I) include

(Ia) a structural unit (I), wherein both $R^1$ and $R^2$ are hydrogen atoms;
(Ib) a structural unit (I), wherein $R^1$ is a hydrogen atom and $R^2$ is a methyl group;
(Ic) a structural unit (I), wherein $R^1$ is a methyl group and $R^2$ is a hydrogen atom;
(Id) a structural unit (I), wherein both $R^1$ and $R^2$ are methyl groups;
(Ie) a structural unit (I), wherein $R^1$ is a hydrogen atom and $R^2$ is an ethyl group;
(If) a structural unit (I), wherein $R^1$ is a methyl group and $R^2$ is an ethyl group;
(Ig) a structural unit (I), wherein $R^1$ is a hydrogen atom and $R^2$ is an n-propyl group;
(Ih) a structural unit (I), wherein $R^1$ is a methyl group and $R^2$ is an n-propyl group;
(Ii) a structural unit (I), wherein $R^1$ is a hydrogen atom and $R^2$ is an n-butyl group;
(Ij) a structural unit (I), wherein $R^1$ is a methyl group and $R^2$ is an n-butyl group;
(Ik) a structural unit (I), wherein $R^1$ is a hydrogen atom and $R^2$ is an n-pentyl group;
(Im) a structural unit (I), wherein $R^1$ is a methyl group and $R^2$ is an n-pentyl group;
(In) a structural unit (I), wherein $R^1$ is a hydrogen atom and $R^2$ is an n-hexyl group;
(Io) a structural unit (I), wherein $R^1$ is a methyl group and $R^2$ is an n-hexyl group;

and the like.
Among those recited above, structural unit (I) is preferably the above-mentioned (Ia), (Ib), (Ic) or (Id), and more preferably (Ia), (Ib) or (Ic), from the aspects of easy availability of raw materials for polyurethane having structural unit (I), adhesion strength between silicone (particularly organohydrogenpolysiloxane having a hydrogen atom bonded to a silicon atom) and polyurethane (A), reactivity of silicone (particularly organohydrogenpolysiloxane having a hydrogen atom bonded to a silicon atom) and a vinyl group or an alkyl-substituted vinyl group in the structural unit (I) of polyurethane (A), and the like.
Polyurethane (A) has structural unit (I) in a proportion of 0.1 - 20 mass% based on the mass of polyurethane. When the content of structural unit (I) is less than 0.1 mass%, the adhesion to silicone decreases. On the other hand, when it is more than 20 mass%, the moldability of a polyurethane composition decreases, and the mechanical properties, heat resistance, weather resistance and the like of molded objects and composite molded objects obtained from the polyurethane composition decrease. The content of the structural unit (I) in polyurethane (A) is preferably 0.5 - 10 mass%, more preferably 0.8 - 8 mass%, further preferably 1 - 5 mass%, based on the mass of polyurethane.
Here, the aforementioned content of structural unit (I) in polyurethane (A) is a value obtained by NMR measurement of polyurethane dissolved in a solvent.
The polyurethane composition of the present invention containing polyurethane (A) having the above-mentioned structural unit (I) in a molecule can be produced by a method including reacting polymer polyol ($a_p$) comprising polymer polyol ($a_p$-1) having a structural unit (I) in a molecule at least as a part of the polymer polyol component with organic polyisocyanate (b) while simultaneously using, as necessary, chain extender (c) in the presence of a urethanization reaction catalyst comprised of at least one kind of metal compound (B) selected from an organozinc compound, an organobismuth compound, an organotitanium compound and an organozirconium compound.
In the above, examples of the functional group reactive with an isocyanato group in polymer polyol ($a_p$) include a hydroxyl group, an amino group, a mercapto group, a carboxyl group, an acid anhydride group, a thiocarboxyl group and the like. Among these, it is preferably a hydroxyl group from the aspects of reactivity with an isocyanato group, easy availability of raw materials, low toxicity, adhesion to silicone and the like.
In polymer polyol ($a_p$), the functional group reactive with an isocyanato group can preferably locate on a terminal of the molecular. The functional group present on a terminal of the molecular is involved in main chain extension during polyurethane formation and can form polyurethane which shows superior properties such as non-tacky, melt-moldability, mechanical properties and the like, and uniform adhesion to silicone.
In polymer polyol ($a_p$), the number of the functional groups reactive with an isocyanato group is preferably not less than 0.7, more preferably 0.7 - 3, particularly further preferably 1.8 - 2.5, on average per molecule.
The number average molecular weight of the polymer polyol ($a_p$) is preferably 500 - 10,000, more preferably 500 - 8,000, sill more preferably 600 - 5,000, further preferably 800 - 5,000, since polyurethane composition, molded object, composite molded object, ink composition, print and the like, which are superior in non-tacky, melt-moldability,

mechanical properties represented by abrasion resistance and tensile strength at break, flexibility, bendability, low permanent set, oil resistance and the like, can be obtained.

In the present invention, when the polyurethane composition of the present invention containing polyurethane (A) and the aforementioned metal compound (B) is produced by a method including reacting polymer polyol ($a_p$) comprising polymer polyol ($a_p$-1) having a structural unit (I) in a molecule at least as a part of the polymer polyol component with organic polyisocyanate (b) while simultaneously using, as necessary, chain extender (c) in the presence of a urethanization reaction catalyst comprised of at least one kind of metal compound (B) selected from an organozinc compound, an organobismuth compound, an organotitanium compound and an organozirconium compound, a polyurethane composition superior in non-tacky, melt-moldability, mechanical properties represented by tensile strength at break, flexibility, bendability, low permanent set and the like can be obtained.

In this case, polyurethane (A) in the obtained polyurethane composition corresponds to polyurethane (Al) containing structural unit (I) in a proportion of 0.1 - 20 mass% based on the mass of polyurethane, which is formed by reacting the above-mentioned polymer polyol ($a_p$) with organic polyisocyanate (b); or polyurethane (A2) containing structural unit (I) in a proportion of 0.1 - 20 mass% based on the mass of polyurethane, which is formed by reacting the above-mentioned polymer polyol ($a_p$) with organic polyisocyanate (b) and a chain extender (c).

In the above-mentioned case using polymer polyol ($a_p$), the amount of metal compound (B) to be used is preferably 0.1 - 2,000 ppm (0.2 mass%), more preferably 0.5 - 200 ppm, still more preferably 1 - 200 ppm, further preferably 1 - 100 ppm, of the total mass of polymer polyol ($a_p$) and organic polyisocyanate (b), or the total mass of polymer polyol ($a_p$), organic polyisocyanate (b) and chain extender (c).

In addition, in the above-mentioned case using polymer polyol ($a_p$), the reaction is preferably performed in a system free of an organotin compound and tertiary amines.

The number average molecular weight of polymer polyol ($a_p$-1) used in the above-mentioned case, and the number average molecular weight of polymer polyol other than polymer polyol ($a_p$-1) contained in polymer polyol ($a_p$) [polymer polyol without structural unit (I), hereafter sometimes to be referred to as "other polymer polyol ($a_p$-2)"] is preferably 500 - 10,000, more preferably 500 - 8,000, still more preferably 600 - 5,000, further preferably 800 - 5,000. Using polymer polyol ($a_p$-1) and other polymer polyol ($a_p$-2) having such number average molecular weight, polyurethane composition, molded object, composite molded object and the like, which are superior in non-tacky, mechanical strength, heat resistance and the like, can be obtained.

When the polyurethane composition of the present invention containing polyurethane (A) is used as an ink binder, other polymer polyol ($a_p$-2) is particularly preferably a polymer polyol having a number average molecular weight of 700 - 5,000, more preferably 1,000 - 3,000. Using other polymer polyol ($a_p$-2) having a number average molecular weight within the aforementioned range, an ink composition superior in adhesion to various polymers such as silicone, dissolution property in a diluent solvent (organic solvent), printing property, drying characteristics and blocking resistance can be obtained. When the number average molecular weight of other polymer polyol ($a_p$-2) is too low, adhesion to various polymers, dissolution property in a diluent solvent (organic solvent) and printing property become inferior, and when it is too high, drying characteristics and blocking resistance tend to decrease easily.

The number average molecular weight of the polymer polyol in the present specification is calculated based on the hydroxyl value measured pursuant to JIS K-1557.

When the number of hydroxyl groups in polymer polyol ($a_p$-1) and other polymer polyol ($a_p$-2) per molecule is 2.0 - 2.1, further 2.0 - 2.07, particularly 2.005 - 2.05, a polyurethane composition more superior in moldability, non-tacky, abrasion resistance, mechanical properties and the like can be obtained.

The content ratio of polymer polyol ($a_p$-1) in polymer polyol ($a_p$) is adjusted in consideration of the content of structural unit (I) in polymer polyol ($a_p$-1), molecular weight of polymer polyol ($a_p$-1), molecular weight of other polymer polyol ($a_p$-2), molecular weight and the amount of organic polyisocyanate (b), molecular weight and the amount of chain extender (c) and the like, such that the content of structural unit (I) in the finally obtained polyurethane (A) falls within the aforementioned range of 0.1 - 20 mass%, preferably 0.5 - 10 mass%, more preferably 0.8 - 8 mass%, still more preferably 1 - 5 mass%.

The polymer polyol ($a_p$-1) having structural unit (I) in a molecule may be any as long as it has a necessary amount of structural unit (I) in a molecule and has a plurality of hydroxyl groups reactive with an isocyanato group. Representative examples thereof include polyolefin polyol such as a polymer having a butadiene unit and/or an isoprene unit polymerized by 1,2-bond and/or 3,4-bond, as well as two or more hydroxyl groups, preferably two hydroxyl groups, and the like.

Specific examples of the polyolefin polyol include polybutadiene polyol mainly polymerized by 1,2-bond, polyisoprene polyol mainly polymerized by 1,2-bond and/or 3,4-bond, butadiene/isoprene copolymer polyol mainly polymerized by 1,2-bond and/or 3,4-bond, copolymer polyol obtained by random copolymerization or block copolymerization of butadiene and/or isoprene obtained by polymerization of butadiene and/or isoprene mainly by 1,2-bond and/or 3,4-bond and other monomer [styrene, α-methylstyrene, 3-methylstyrene, 4-propylstyrene, 4-cyclohexylstyrene, 4-dodecylstyrene, 2-ethyl-4-benzylstyrene, 4-(phenylbutyl)styrene, 1-vinylnaphthalene, acrylonitrile, olefin, vinyl chloride, (meth)acrylic acid ester

and the like], and the like. These polymer polyols ($a_p$-1) may be used alone, or two or more kinds thereof may be used simultaneously.

Polymer polyol ($a_p$-1) is preferably at least one kind selected from polybutadiene polyol, polyisoprene polyol and butadiene/isoprene copolymer polyol.

In these polymer polyols ($a_p$-1), the total proportion of 1,2-bond unit and 3,4-bond unit in all structural units derived from butadiene and/or isoprene is generally preferably not less than 80 mol%, more preferably not less than 85 mol%, still more preferably 90 - 100 mol%.

In copolymer polyol of butadiene and/or isoprene and a monomer other than these, the proportion of the structural unit derived from butadiene and/or isoprene in the copolymer polyol is not less than 80 mass%, preferably not less than 85 mass%, particularly 90 - 99 mass%, since a given amount of structural unit (I) can be contained in the copolymer polyol with ease, and adhesion to silicone can be effectively expressed.

As other polymer polyol ($a_p$-2) to be used as a part of polymer polyol ($a_p$) together with polymer polyol ($a_p$-1) having structural unit (I), any polymer polyol conventionally used for the production of polyurethane can be used.

Representative examples of such other polymer polyol ($a_p$-2) include polyester polyol, polyether polyol, polycarbonate polyol, polyester polycarbonate polyol, polyolefin polyol, castor oil based polyol, vinyl polymer based polyol and the like, which are free of structural unit (I). Such other polymer polyols ($a_p$-2) may be used alone, or two or more kinds thereof may be used simultaneously. Among these, as other polymer polyol ($a_p$-2), polyester polyol, polyether polyol and polyolefin polyol are preferably used, and polyester polyol and/or polyether polyol are/is used more preferably.

Examples of the above-mentioned polyester polyol that can be used as other polymer polyol ($a_p$-2) include polyester polyol obtained by a direct-esterification reaction or transesterification reaction of a polyol component with a polycarboxylic acid component such as polycarboxylic acid, an ester-formable derivative (e.g., an ester thereof, an acid anhydride thereof and the like), and the like, polyester polyol obtained by ring-opening polymerization of lactone using polyol as an initiator, and the like, according to conventional methods.

The aforementioned polyol component to be used for the production of polyester polyol by reacting a polyol component with a polycarboxylic acid component may be any as long as it is generally used for the production of polyester. For example, diol having 2 hydroxyl groups per molecule, for example, aliphatic diol having a carbon number of 2 - 15 such as ethylene glycol, diethylene glycol, triethylene glycol, propylene glycol, 1,3-propanediol, 2-methyl-1,3-propanediol, 2,2-diethyl-1,3-propanediol, 1,3-butanediol, 1,4-butanediol, 2-methyl-1,4-butanediol, neopentylglycol, 1,5-pentanediol, 3-methyl-1,5-pentanediol, 1,6-hexanediol, 1,7-heptanediol, 1,8-octanediol, 2-methyl-1,8-octanediol, 2,7-dimethyl-1,8-octanediol, 1,9-nonanediol, 2-methyl-1,9-nonanediol, 2,8-dimethyl-1,9-nonanediol, 1,10-decanediol and the like; alicyclic diol such as 1,4-cyclohexanediol, cyclohexane dimethanol, cyclooctane dimethanol, dimethylcyclooctane dimethanol and the like; aromatic dihydric alcohol such as 1,4-bis(β-hydroxyethoxy)benzene and the like, and the like, and polyol having 3 or more hydroxyl groups per molecule such as trimethylolpropane, trimethylolethane, glycerol, 1,2,6-hexanetriol, pentaerythritol, diglycerol and the like, and the like can be mentioned. In the production of polyester polyol, these polyol components may be used alone, or two or more kinds may be used simultaneously.

When the polyurethane composition of the present invention comprising polyurethane (A) as a base is used as an ink binder, as a polyol component for forming polyester polyol used as other polymer polyol ($a_p$-2), branched aliphatic diol having a carbon number of 5 - 12 and having a methyl group as a side chain such as 2-methyl-1,4-butanediol, 3-methyl-1,5-pentanediol, 2-methyl-1,8-octanediol, 2,7-dimethyl-1,8-octanediol, 2-methyl-1,9-nonanediol, 2,8-dimethyl-1,9-nonanediol and the like is preferably used. Particularly, a polyurethane composition containing polyurethane (A), which is used as an ink binder, is preferably produced by using, together with polymer polyol ($a_p$-1), polyester polyol produced by using a polyol component containing such branched aliphatic diol in a proportion of not less than 30 mol%, further, not less than 50 mol%, of the total polyol component used for the production of polyester polyol. Such ink binder is superior in the dissolution property in an organic solvent, adhesion to various polymers, printing property of an ink composition containing same, and the like.

The aforementioned polycarboxylic acid component to be used for the production of the polyester polyol obtained by reacting the polyol component with the polycarboxylic acid component may be any as long as it is generally used for the production of polyester. For example, aliphatic dicarboxylic acid having a carbon number of 4 - 12 such as succinic acid, glutaric acid, adipic acid, pimelic acid, suberic acid, azelaic acid, sebacic acid, dodecanedioic acid, methylsuccinic acid, 2-methylglutaric acid, 3-methylglutaric acid, trimethyladipic acid, 2-methyloctanedioic acid, 3,8-dimethyldecanedioic acid, 3,7-dimethyldecanedioic acid and the like; alicyclic dicarboxylic acid such as cyclohexanedicarboxylic acid, dimer acid, hydrogenated dimer acid and the like; aromatic dicarboxylic acid such as terephthalic acid, isophthalic acid, orthophthalic acid, naphthalenedicarboxylic acid and the like; at least trifunctional polycarboxylic acid such as trimellitic acid, pyromellitic acid and the like; or an ester-formable derivative thereof and the like can be mentioned. These polycarboxylic acid components may be used alone, or two or more kinds may be used simultaneously. Among these, aliphatic dicarboxylic acid having a carbon number of 6 - 12, particularly one or more kinds of adipic acid, azelaic acid and sebacic acid is/are preferably used.

Examples of the lactone to be used for the production of the polyester polyol obtained by a lactone ring-opening

polymerization include ε-caprolactone, β-methyl-δ-valerolactone and the like.

Examples of the above-mentioned polyester polyol usable as other polymer polyol ($a_p$-2) include polyethylene glycol, polypropylene glycol, polytetramethylene glycol, poly (methyltetramethylene glycol) and the like, which are obtained by ring-opening polymerization of cyclic ether in the presence of polyol. One or more kinds of these can be used. Among these, polytetramethylene glycol and/or poly(methyltetramethylene glycol) are/is preferably used.

Examples of the above-mentioned polycarbonate polyol usable as other polymer polyol ($a_p$-2) include those obtained by reacting polyol with a carbonate compound such as dialkyl carbonate, alkylene carbonate, diaryl carbonate and the like. As a polyol constituting polycarbonate polyol, a polyol component exemplified above as a component usable for the production of polyester polyol can be used. As dialkyl carbonate, dimethyl carbonate, diethyl carbonate and the like can be mentioned; as alkylene carbonate, ethylene carbonate and the like can be mentioned; and as diaryl carbonate, diphenyl carbonate and the like can be mentioned.

Examples of the above-mentioned polyester polycarbonate polyol usable as other polymer polyol ($a_p$-2) include one obtained by simultaneously reacting polyol, polycarboxylic acid and a carbonate compound, or one obtained by synthesizing polyester polyol and polycarbonate polyol in advance by the above-mentioned method and reacting them with a carbonate compound, or with polyol and polycarboxylic acid, and the like.

Examples of the above-mentioned polyolefin polyol usable as other polymer polyol ($a_p$-2) include hydrogen additives of conjugated diene-based polymer polyols such as polyisoprene polyol, polybutadiene polyol, butadiene/isoprene copolymer polyol, butadiene/acrylonitrile copolymer polyol, butadiene/styrene copolymer polyol and the like, which are obtained by, for example, living polymerization of conjugated diene such as butadiene/isoprene and the like, or conjugated diene and other monomer, in the presence of a polymerization initiator, followed by reaction of a polymerization active terminal with a hydroxyl group-containing epoxy compound, and the like, and one or more kinds thereof can be used.

The kind of the organic polyisocyanate (b) to be used for the production of the polyurethane composition of the present invention is not particularly limited, and any organic polyisocyanate conventionally used for the production of polyurethane can be used. For example, aromatic diisocyanate such as 4,4'-diphenylmethane diisocyanate, tolylene diisocyanate, phenylene diisocyanate, xylylene diisocyanate, 1,5-naphthylene diisocyanate, 3,3'-dichloro-4,4'-diphenylmethane diisocyanate and the like; aliphatic or alicyclic diisocyanate such as hexamethylene diisocyanate, isophorone diisocyanate, 4,4'-dicyclohexylmethane diisocyanate, hydrogenated xylylene diisocyanate and the like; and the like can be mentioned. These organic polyisocyanates may be used alone, or two or more kinds may be used simultaneously.
When the polyurethane composition of the present invention is used for the production of molded objects, composite molded objects and the like, aromatic diisocyanate is preferable from among the above-mentioned organic polyisocyanates, and particularly, 4,4'-diphenylmethane diisocyanate is more preferably used.
When the polyurethane composition of the present invention is used as an ink binder or ink composition, aliphatic or alicyclic diisocyanate is preferably used from among the above-mentioned organic polyisocyanates from the aspects of adhesiveness, prevention of yellowing, low toxicity and the like, and particularly, hexamethylene diisocyanate, isophorone diisocyanate and 4,4'-dicyclohexylmethane diisocyanate are more preferably used. These organic polyisocyanates may be used alone, or two or more kinds may be used simultaneously.

As chain extender (c) used as necessary for the production of the polyurethane composition of the present invention, any low molecular weight compound having two or more active hydrogen atoms, which is generally used as a chain extender for the production of polyurethane, can be used and is not particularly limited. Examples of the chain extender (c) usable in the present invention include diols such as ethylene glycol, propylene glycol, 1,4-butanediol, 1,6-hexanediol, 1,4-bis(β-hydroxyethoxy)benzene, 1,4-cyclohexanediol, bis(β-hydroxyethyl)terephthalate, xylylene glycol and the like; diamines such as hydrazine, ethylenediamine, propylenediamine, xylylenediamine, isophoronediamine, piperazine and a derivative thereof, phenylenediamine, tolylene diamine, xylenediamine, adipic acid dihydrazide, isophthalic acid dihydrazide and the like; amino alcohols such as aminoethyl alcohol, aminopropyl alcohol and the like; and the like. These chain extenders may be used alone, or two or more kinds may be used simultaneously.
Of the above-mentioned chain extenders, when the polyurethane composition of the present invention is used for the production of molded objects, composite molded objects and the like, aliphatic diol having a carbon number of 2 - 10 is preferably used, and 1,4-butanediol is more preferably used.
When the polyurethane composition of the present invention is used as an ink binder or ink composition, diamines having a hydroxyl group in a molecule such as 2-hydroxyethylethylenediamine, 2-hydroxyethylpropylenediamine, di-2-hydroxypropylethylenediamine and the like, and the like can also be used simultaneously as chain extender (c), in addition to the above-mentioned compounds.
To contain a particular amount of structural unit (I) represented by the above-mentioned formula (I) in the obtained polyurethane, a compound having structural unit (I) and a molecular weight of 100 - 450 may also be used as chain extender (c).

In addition, when the polyurethane composition of the present invention is used as an ink binder or ink composition, the molecular weight of polyurethane and the like can also be adjusted as necessary by using monohydric

alcohol such as ethanol, isopropyl alcohol and the like, monoamine such as din-butylamine and the like, and the like as a polymerization terminator.

The ratio of each component used for producing the polyurethane composition of the present invention is appropriately determined in consideration of the hardness, mechanical properties and the like to be imparted to the object polyurethane (A).

When the polyurethane composition of the present invention is used for the production of molded objects, composite molded objects and the like, each component is preferably used in an amount such that the molar ratio of the active hydrogen atom:isocyanato group in the reaction system is 1:0.9 - 1.3, particularly 1:0.9 - 1.1. Using each component in the aforementioned proportion, the polyurethane composition, molded object, composite molded object and the like of the present invention comprising polyurethane (A) superior in the properties such as mechanical properties represented by abrasion resistance, tensile strength at break, tensile elongation at break and the like, water resistance, bendability, oil resistance, elastic recovery property and the like can be obtained.

When the polyurethane composition of the present invention is used for an ink binder or ink composition, each component is preferably used in an amount such that the molar ratio of the active hydrogen atom:isocyanato group in the reaction system is 1:0.9 - 1.5, particularly 1:0.9 - 1.1.

Using each component in the aforementioned proportion, polyurethane composition for ink binder, ink binder and ink composition affording a print superior in the properties such as surface strength, non-tacky, oil resistance and the like can be obtained.

A method of urethanization reaction for the production of the polyurethane composition of the present invention is not particularly limited, and any known urethanization reaction technique can be employed, wherein both a prepolymer method and a one-shot method can be employed.

When the polyurethane composition of the present invention is used for the production of molded objects, composite molded objects and the like, a method comprising adding metal compound (B) as a urethanization reaction catalyst to a mixture an active hydrogen-containing compound such as polymer polyol and the like, organic polyisocyanate (b) and, where necessary, chain extender (c), and conducting melt polymerization substantially in the absence of a solvent is preferably employed. Particularly, a method of continuous melt polymerization using a multi-screw extruder is more preferably employed. The aforementioned melt polymerization reaction is generally performed preferably at 180 - 280˚C, particularly 200 - 260˚C.

When the polyurethane composition of the present invention is used as an ink binder, for example, a method comprising mixing an active hydrogen-containing compound such as polymer polyol and the like and, where necessary, chain extender (c), adding organic polyisocyanate (b) in an organic solvent to allow reaction (one-step method; one-shot method), a method comprising reacting an active hydrogen-containing compound such as polymer polyol and the like with organic polyisocyanate (b) at, for example, 60 - 120˚C in advance to give a prepolymer having an isocyanato group at the terminal, dissolving the prepolymer in an organic solvent added, and reacting the prepolymer with chain extender (c) to give polyurethane (two-step method; prepolymer method) and the like can be employed.

In the present invention, organotin compounds and tertiary amines, which are widely used conventionally as urethanization reaction catalysts, are preferably not used for the production of polyurethane (A). At least one kind of metal compound (B) selected from an organozinc compound, an organobismuth compound, an organotitanium compound and an organozirconium compound is preferably used as a urethanization reaction catalyst. Such polyurethane composition of the present invention contains one or more kinds of metal compound (B) selected from an organozinc compound, an organobismuth compound, an organotitanium compound and an organozirconium compound, along with polyurethane (A).

In the present invention, an organotitanium compound and/or an organozirconium compound are/is preferably used, and an organotitanium compound is more preferably used as metal compound (B).

For production of polyurethane (A), when an organotin compound, tertiary amines and the like, which are widely used conventionally for the production of polyurethane, are used as catalysts, the thereby-obtained polyurethane composition containing the aforementioned catalyst shows, for an unknown reason, a lowered curing function of platinum catalysts and the like used as silicone-curing catalyst, and a composite molded object wherein polyurethane and silicone are tightly adhered may not be obtained. From such aspect, it is preferable that the polyurethane composition of the present invention does not contain organotin compounds and tertiary amines.

Specific examples of the organozinc compound used for producing the polyurethane composition of the present invention include zinc acetylacetonate, zinc propionate, zinc octanoate, zinc 2-ethylhexanoate, zinc neodecanoate, zinc laurate, zinc stearate, zinc linoleate, zinc naphthenate, zinc benzoate, zinc salicylate and the like.

Specific examples of the organobismuth compound include bis(acetylacetone)bismuth, bismuth 2-ethylhexanoate, bismuth neodecanoate, bismuth salicylate and the like.

Specific examples of the organotitanium compound include tetraalkoxy titanium compounds such as tetraisopropyl titanate, tetra-n-butyl titanate, tetra-2-ethylhexyl titanate, tetrastearyl titanate and the like; titanium acylate compounds such as polyhydroxy titanium stearate and the like; titanium chelate compounds such as titanium acetylacetonate,

triethanolamine titanate, titanium ammonium lactate, titanium ethyl lactate, titanium octylene glycol and the like, and the like.

Specific examples of the organozirconium compound include zirconium tetraisopropoxide, zirconium tetra-n-butoxide, zirconium tetra-t-butoxide, zirconium 2-ethylhexanoate, zirconium neodecanoate, zirconium acetylacetonate and the like.

The metal compound (B) is used in an amount of 0.1 - 2,000 ppm (0.2 mass%) relative to the mass of polyurethane (A). When the amount of metal compound (B) used is less than 0.1 ppm based on the mass of polyurethane (A), the melt-moldability, adhesion to silicone and the like of the polyurethane composition tends to decrease with ease, and when it exceeds 2,000 ppm, the melt-moldability (particularly melt retention stability) of polyurethane decreases. The metal compound (B) is preferably used in an amount of 0.5 - 200 ppm, preferably 1 - 200 ppm, more preferably 1 - 100 ppm, relative to the mass of polyurethane (A).

The polyurethane composition of the present invention preferably contains at least one kind of compound (C) selected from a phosphorus compound and a phenolic compound, together with the above-mentioned metal compound (B).

At least one kind of compound (C) selected from a phosphorus compound and a phenolic compound functions as a quencher of the aforementioned metal compound (B) that can be used as a urethanization reaction catalyst, and improves the processing stability and durability (water resistance, heat resistance, weather resistance and the like) of the polyurethane composition of the present invention.

Since compound (C) is mainly used for quenching metal compound (B), it is preferably added after completion of the urethane formation reaction of the polyurethane composition.

As the above-mentioned phosphorous compound, phosphorus compounds represented by the following formulas (IIa)-(IIc) are preferably used.

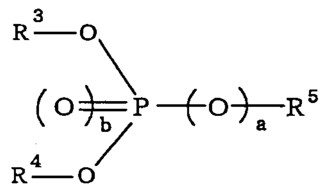

(II a)

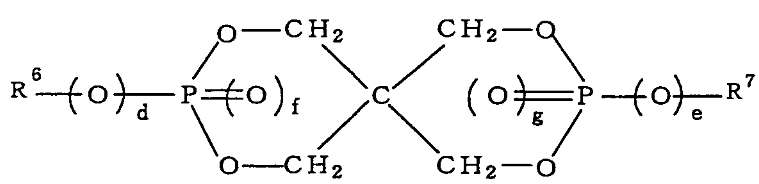

(II b)

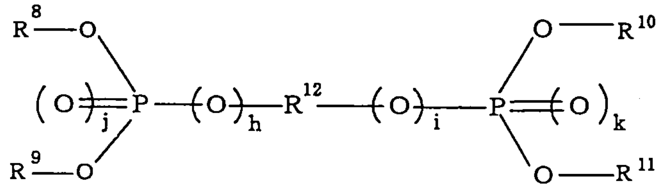

(II c)

In the formula (IIa), $R^3$ - $R^5$ are each independently a hydrogen atom or a monovalent hydrocarbon group, and a and b are each 0 or 1; in the formula (IIb), $R^6$ and $R^7$ are each independently a monovalent hydrocarbon group, and d, e, f and g are each 0 or 1; and in the formula (IIc), $R^8$ - $R^{11}$ are each independently a monovalent hydrocarbon group, $R^{12}$ is a divalent hydrocarbon group, and h, i, j and k are each 0 or 1.

In the above-mentioned formula (IIa), when a is 1, at least one of $R^3$ - $R^5$ is preferably an aliphatic hydrocarbon group or an alicyclic hydrocarbon group. In addition, in the above-mentioned formula (IIc), when both h and i are 1, at least one of $R^8$ - $R^{11}$ is preferably an aliphatic hydrocarbon group or an alicyclic hydrocarbon group.

In the phosphorus compounds represented by the above-mentioned formulas (IIa)-(IIc), when $R^3$ - $R^{11}$ are

monovalent hydrocarbon groups, each is preferably a hydrocarbon group having a carbon number of 1 - 30. Specific examples thereof include aliphatic hydrocarbon groups such as a methyl group, an ethyl group, a propyl group, a butyl group, a pentyl group, a hexyl group, an octyl group, an isooctyl group, a 2-ethylhexyl group, a nonyl group, a decyl group, a dodecyl group, an isodecyl group, an octadecyl group and the like; alicyclic hydrocarbon groups such as a cyclohexyl group and the like; aromatic hydrocarbon groups such as a phenyl group, a nonylphenyl group, a cresyl group, a 2,4-di-t-butylphenyl group, a 2,6-di-t-butyl-4-methylphenyl group, a naphthyl group, a benzyl group, a 3,5-di-t-butyl-4-hydroxybenzyl group etc. and the like. When $R^3$ - $R^{11}$ are aromatic hydrocarbon groups, each may have a substituent such as a halogen atom, an alkoxy group, a phenoxy group, a hydroxyl group and the like on the aromatic ring. In addition, in the phosphorus compound represented by the above-mentioned formula (IIc), a divalent hydrocarbon group for $R^{12}$ is preferably a divalent hydrocarbon group having a carbon number of 1 - 50. Specific examples thereof include divalent aliphatic hydrocarbon groups such as a methylene group, an ethylene group, a propylene group, a butylene group and the like; divalent alicyclic hydrocarbon groups such as a cyclohexylene group and the like; divalent aromatic hydrocarbon groups such as a phenylene group, a biphenylene group, a 4,4'-butylidene-bis(3-methyl-6-t-butylphenyl) group, a 4,4'-isopropylidenediphenyl group etc. and the like. When $R^{12}$ is a divalent aromatic hydrocarbon group, it may have a substituent such as a halogen atom, an alkoxy group, a phenoxy group, a hydroxyl group and the like on the aromatic ring.

Specific examples of the phosphorus compound represented by the above-mentioned formula (IIa) include phosphorous acid, phosphoric acid; phosphorous acid ester such as methyl phosphite, ethyl phosphite, isopropyl phosphite, butyl phosphite, 2-ethylhexyl phosphite, lauryl phosphite, oleyl phosphite, stearyl phosphite, phenyl phosphite, dimethyl phosphite, diethyl phosphite, diisopropyl phosphite, dibutyl phosphite, bis(2-ethylhexyl)phosphite, dilauryl phosphite, dioleyl phosphite, distearyl phosphite, diphenyl phosphite, trimethyl phosphite, triethyl phosphite, tributyl phosphite, trioctyl phosphite, tris(2-ethylhexyl)phosphite, trinonyl phosphite, tris(decyl)phosphite, tridodecyl phosphite, tris(octadecyl) bis(phosphite, tricyclohexyl phosphite, diphenylisooctyl phosphite, phenyldiisooctyl phosphite, diphenylisodecyl phosphite, phenyldiisodecyl phosphite and the like; phosphate ester such as methyl phosphate, ethyl phosphate, isopropyl phosphate, butyl phosphate, 2-ethylhexyl phosphate, lauryl phosphate, oleyl phosphate, stearyl phosphate, phenyl phosphate, dimethyl phosphate, diethyl phosphate, diisopropyl phosphate, dibutyl phosphate, bis(2-ethylhexyl)phosphate, dilauryl phosphate, dioleyl phosphate, distearyl phosphate, diphenyl phosphate, trimethyl phosphate, triethyl phosphate, tributyl phosphate, trioctyl phosphate, tris(2-ethylhexyl)phosphate, tris(decyl)phosphate, tridodecyl phosphate, tris(octadecyl)phosphate, tricyclohexyl phosphate and the like; diester of phosphonous acid derivative such as phenyl phosphonous acid dimethyl, phenyl phosphonous acid diethyl, phenyl phosphonous acid dibutyl, phenyl phosphonous acid dioctyl, phenyl phosphonous acid didodecyl, phenyl phosphonous acid bis(octadecyl), phenyl phosphonous acid dicyclohexyl, phenyl phosphonous acid diphenyl and the like; diester of phosphonic acid derivative such as phenyl phosphonic acid dimethyl, phenyl phosphonic acid diethyl, phenyl phosphonic acid dibutyl, phenyl phosphonic acid dioctyl, phenyl phosphonic acid didodecyl, phenyl phosphonic acid bis(octadecyl), phenyl phosphonic acid dicyclohexyl, phenyl phosphonic acid diphenyl, 3,5-di-t-butyl-4-hydroxybenzyl phosphonic acid diethyl etc. and the like.

Specific examples of the phosphorus compound represented by the above-mentioned formula (IIb) include phosphorous acid triester such as didodecylpentaerythritol diphosphite, bis(octadecyl)pentaerythritol diphosphite, bis (nonylphenyl)pentaerythritol diphosphite, bis(2,4-di-t-butylphenyl)pentaerythritol diphosphite, bis(2,6-di-t-butyl-4-methylphenyl)pentaerythritol diphosphite and the like; phosphoric acid triester such as bis(octadecyl)pentaerythritol diphosphate etc. and the like.

Specific examples of the phosphorus compound represented by the above-mentioned formula (IIc) include phosphorous acid triester such as 4,4'-butylidene-bis(3-methyl-6-t-butylphenylditridecyl) phosphite, 4,4'-isopropylidenediphenoltetrakis(tridecyl)diphosphite and the like; diester of phosphonous acid derivative such as tetrakis(2,4-di-t-butylphenyl)-4,4'-biphenylene phosphonite etc. and the like.

As the phosphorus compound, one or more kinds of the above-mentioned phosphorus compounds can be used. As the phosphorus compound from among the above-mentioned compounds, phosphate ester and diester of phosphonic acid derivative are preferable, specifically lauryl phosphate, oleyl phosphate, stearyl phosphate, dilauryl phosphate, dioleyl phosphate, distearyl phosphate, tris(2-ethylhexyl)phosphate, bis(octadecyl)pentaerythritol diphosphate, phenyl phosphonic acid diethyl, 3,5-di-t-butyl-4-hydroxybenzyl phosphonic acid diethyl and the like are particularly preferable.

In addition, specific examples of the phenolic compound include hindered phenol compounds such as 2,2'-methylenebis(4-methyl-6-t-butylphenol), 2-butyl-6-(3'-t-butyl-2'-hydroxy-5'-methylbenzyl)-4-methylphenylacrylate, 2-[1-(2-hydroxy-3,5-dipentylphenyl) ethyl]-4,6-dipentylphenylacrylate, 4,4'-butylidenebis(3-methyl-6-t-butylphenol), 4,4'-thiobis(3-methyl-6-t-butylphenol), triethylene glycol-bis[3-(3-t-butyl-5-methyl-4-hydroxyphenyl) propionate], 1,1,3-tris(2-methyl-4-hydroxy-5-t-butylphenyl) butane, 1,3,5-(t-butyl-3-hydroxy-2,6-dimethylbenzyl)-1,3,5-triazine-2,4,6-(1H, 3H,5H)-trione, 2,2'-methylenebis(4-ethyl-6-t-butylphenol) and the like; hydroxybenzophenone-based compounds such as 2-hydroxy-4-octylbenzophenone, 2-hydroxy-4-dodecyloxybenzophenone, 2-hydroxy-4-benzyloxybenzophenone, bis (5-benzoyl-4-hydroxy-2-methoxyphenyl)methane and the like; hydroxybenzotriazole-based compounds such as 2-[2'-hydroxy-3'-(3",4",5",6"-tetrahydrophthalimidomethyl)-5'-methylphenyl]benzotriazole, 2-(2'-hydroxy-3',5'-t-butylphenyl)benzotriazole, 2-(2'-hydroxy-5'-t-octylphenyl)benzotriazole, 2-(2'-hydroxy-3',5'-t-amylphenyl)benzotriazole, 2-[2-hydroxy-3,5-bis(α,α-dimethylbenzyl)phenyl]-2H-benzotriazole, 2,2'-methylenebis{4-(1,1,3,3-tetramethylbutyl)-6-[(2H-benzotriazol-2-yl)phenol]} and the like; salicylic acid-based compounds such as 4-t-butylphenylsalicylic acid and the like, hydroxy benzoic acid-based compounds such as phenyl 4-t-butyl-p-hydroxy benzoate and the like; catechol-based compounds such as octyl 3,4-dihydroxy benzoate and the like; resorcinol-based compounds such as octyl 3,5-dihydroxybenzoate and the like; biphenolic compounds such as 4,4'-octyl-2,2'-biphenol and the like; binaphthol-based compounds such as 2,2'-binaphthol etc. and the like. As the phenolic compound, one or more kinds from the above-mentioned compounds can be used.

When at least one kind of compound (C) selected from a phosphorus compound and a phenolic compound is used, the amount thereof to be used is preferably 1 - 20,000 ppm (2 mass%) based on the mass of polyurethane (A). When the amount of compound (C) (phosphorus compound and/or phenolic compound) to be used is less than 1 ppm based on the mass of polyurethane (A), the melt-moldability (particularly melt retention stability) of the polyurethane composition may decrease. On the other hand, when the amount of compound (C) (phosphorus compound and/or phenolic compound) to be used exceeds 20,000 ppm (2 mass%) based on the mass of polyurethane (A), the surface condition of the molded object obtained from the polyurethane composition is impaired, the adhesion to silicone tends to decrease during production of a laminated composite and the like having a layer comprised of a polyurethane composition and a silicone layer, and curability of a curable silicone composition is sometimes inhibited. The amount of compound (C) (phosphorus compound and/or phenolic compound) to be used is more preferably 5 - 2,000 ppm (0.2 mass%), still more preferably 5 - 1,000 ppm (0.1 mass%), particularly preferably 5 - 500 ppm, most preferably 10 - 250 ppm, based on the mass of polyurethane (A).

In addition, referring to the proportion of use of at least one kind of metal compound (B) selected from an organozinc compound, an organobismuth compound, an organotitanium compound and an organozirconium compound, when a phosphorus compound is used, it is preferably used in a proportion such that the phosphorus atom in the phosphorus compound is 0.1 - 500 mole, more preferably 0.2 - 200 mole, still more preferably 0.5 - 100 mole, per 1 mole of metal atom in metal compound (B).
When a phenolic compound is used, it is preferably used in a proportion such that the hydroxyl group in the phenolic compound is 0.1 - 5,000 mole, more preferably 2 - 2,000 mole, still more preferably 5 - 1,000 mole, per 1 mole of metal atom in metal compound (B).

Polyurethane (A) to be the base of the polyurethane composition of the present invention is preferably polyurethane having an inherent viscosity ($\eta_{inh}$) of 0.5 - 1.5 dl/g, further 0.6 - 1.4 dl/g, particularly 0.7 - 1.3 dl/g, when dissolved in an N,N-dimethylformamide solvent at a concentration of 0.5 g/dl and measured at 30°C. The polyurethane composition of the present invention containing polyurethane (A) having the aforementioned inherent viscosity ($\eta_{inh}$) is superior in the adhesion to silicone. Moreover, polyurethane composition containing polyurethane (A) having the aforementioned inherent viscosity ($\eta_{inh}$), and molded objects, composite molded objects and the like obtained therefrom are superior in the properties such as mechanical properties represented by abrasion resistance, tensile strength at break, tensile elongation at break and the like, bendability, oil resistance, elastic recovery property, water resistance, water repellency, heat resistance, cold resistance, release property, electrical insulating property and the like.
The inherent viscosity ($\eta_{inh}$) of polyurethane in the present specification means a value measured according to the method described in the following Examples.

In addition, when the polyurethane composition of the present invention is used as an ink binder, the number average molecular weight of polyurethane (A) to be the base of the polyurethane composition is preferably 5,000 - 100,000, more preferably 8,000 - 50,000, from the aspects of the surface strength, non-tacky, oil resistance and the like of the print obtained by using the ink composition prepared from the ink binder. When the number average molecular weight of polyurethane (A) is too small, the surface strength, non-tacky, oil resistance and the like of the print formed by using the ink composition tend to decrease. On the other hand, when it is too high, the viscosity of the ink binder becomes high to cause poor handling properties. In addition, the gloss of the ink composition and print tends to decrease, and the redissolution of the ink composition in an organic solvent tends to be low.
Here, the number average molecular weight of polyurethane in the present specification is measured according to the method described in the following Examples.

Polyurethane (A) to be the base of the polyurethane composition of the present invention preferably has a nitrogen atom content of 1 - 6 mass%, more preferably 1.5 - 5 mass%, still more preferably 2 - 4.5 mass%. Polyurethane (A) having a nitrogen atom content within the aforementioned range is superior in adhesion to silicone. Moreover, a polyurethane composition containing polyurethane (A) having a nitrogen atom content within the aforementioned range and molded objects, composite molded objects and the like obtained therefrom are superior in the properties such as mechanical properties represented by abrasion resistance, tensile strength at break, tensile elongation at break and the like, bendability, oil resistance, elastic recovery property, water resistance, water repellency, heat resistance, cold resistance, release property, electrical insulating property and the like.
The "nitrogen atom content of polyurethane" in the present specification is determined by an elemental analysis method

of nitrogen.

When the polyurethane composition of the present invention is used as an ink binder, polyurethane (A) to be the base of the polyurethane composition preferably has an amino group in a molecule. Polyurethane (A) having an amino group in a molecule can be obtained by using, as chain extender (c) and/or polymerization terminator during production of the polyurethane composition of the present invention containing polyurethane (A) by the above-mentioned two-step method (prepolymer method), an amine-based compound in such an amount as makes an amino group present in excess of a free isocyanato group present at the terminal of a prepolymer. In this case, polyurethane (A) has an amino group content in an amine value per 1 g of polyurethane (A) of preferably not more than 0.5 KOH mg/g, more preferably not more than 0.3 KOH mg/g, from the aspects of adhesiveness of the ink binder, and non-tacky, curability and the like of the obtained print.

The "amine value of polyurethane" in the present specification corresponds to the number of mg of KOH in equimolar to the number of moles of hydrochloric acid necessary for neutralizing an amino group contained in 1 g of polyurethane, and can be determined by titration using an indicator or potentiometric titration.

The polyurethane composition of the present invention may contain any component, as necessary, various additives such as a release agent, a reinforcing agent, a colorant, a flame-retardant, a UV absorber, an antioxidant, an improver of hydrolysis resistance, a fungicide, an antibacterial agent, a stabilizer and the like; various fibers such as glass fiber, polyester fiber and the like; inorganic material talc, silica and the like; various coupling agents; polymer other than polyurethane (A) and the like, as long as the effect of the present invention is not impaired.

The polyurethane composition of the present invention is superior in melt-moldability, and can smoothly produce various molded objects (e.g., sheet, film, plate, tubular object, rod-like object, hollow molded object, various containers, various block molded objects and various molding products and the like) by any molding method such as injection molding, extrusion molding, inflation molding, blow molding, calender molding, press molding, casting and the like. Particularly, since the polyurethane composition of the present invention is nonadhesive, does not easily adhere to molding apparatus, mold and the like and is superior in melt-moldability, various molded objects of high quality can be produced with good producibility.

The molding method, molding condition and molding apparatus for the production of a molded object using the polyurethane composition of the present invention are not particularly limited, and the molding method, molding condition, molding apparatus and the like conventionally adopted for the production of a molded object using polyurethane, particularly thermoplastic polyurethane, can be adopted. For melt molding using the polyurethane composition of the present invention, generally, the polyurethane composition of the present invention is heated and melted at 180 - 230°C, particularly 190 - 220°C, and then molded, whereby a molded object can be produced smoothly.

A molded object obtained by using the polyurethane composition of the present invention is non-tacky but shows superior adhesion to silicone, superior properties such as mechanical properties represented by abrasion resistance, tensile strength at break, tensile elongation at break and the like, bendability, oil resistance, water resistance, elastic recovery property and the like, small permanent set, appropriate flexibility, a smooth surface and good surface condition. Therefore, a molded object obtained by using the polyurethane composition of the present invention can be used for various applications utilizing the aforementioned properties, for example, conveyor belt; various key sheets, keyboards used for push-button switch of cell phone, home electric appliance, automobile part, communication device and the like; laminate products; films and sheets for various containers; hose; tube; automobile part; machine part; shoe sole; watch band; packing material; vibration damper; convenience goods and the like.

Particularly, the polyurethane composition of the present invention containing polyurethane (A) as the base forms a tight joint with silicone even without a surface activation treatment of silicone such as a primer treatment and the like, since an unsaturated hydrocarbon group in the structural unit (I) contained in the polyurethane (A) molecule reacts with silicone (organohydrogenpolysiloxane) having a hydrogen atom bonded to a silicon atom, in the presence of a hydrosilylation catalyst, and also reacts with silicone having an unsaturated group such as vinyl group and the like in a molecule.

From such aspect, the polyurethane composition of the present invention is extremely effective for the production of a laminate structure or a composite molded object wherein a silicone layer is tightly joined with a polyurethane layer. Thus, the present invention encompasses, within its scope, a composite molded object wherein a silicone layer is laminated on a layer comprised of the polyurethane composition of the present invention.

A composite molded object wherein a layer comprised of the polyurethane composition of the present invention [hereafter sometimes to be referred to simply as a "polyurethane composition layer"] and a layer comprised of silicone [sometimes to be referred to simply as a "silicone layer"] are adhered and laminated may consist only of the polyurethane composition layer and the silicone layer, or may have, together with the polyurethane composition layer and silicone layer, one or more kinds of layers comprised of other materials [e.g., layer comprised of polymer or polymer composition other than the polyurethane composition of the present invention, paper, cloth, metal, ceramic, lumber etc.] [hereinafter sometimes to be referred to simply as "other material layer"].

In addition, the number of layers in a composite molded object wherein a polyurethane composition layer and a silicone

layer are adhered and laminated is not particularly limited, and it may have any structure selected from a two-layered structure, a three-layered structure, a four-layered structure, and a not less than five-layered structure.
Furthermore, when a composite molded object having a polyurethane composition layer and a silicone layer has a polyurethane composition layer, a silicone layer and other material layer, the polyurethane composition layer and/or the silicone layer, and other material layer may be adhered and laminated over the whole area of one surface, or may be continuously or intermittently adhered and laminated (e.g., line-adhesion, spot-adhesion, partial face-adhesion etc.).

Unlimitatively, examples of the composite molded object of the present invention having a polyurethane composition layer and a silicone layer include a two-layered structure of polyurethane composition layer/silicone layer; a three-layered structure of silicone layer/polyurethane composition layer/silicone layer; a three-layered structure of polyurethane composition layer/silicone layer/polyurethane composition layer; a four-layered structure of polyurethane composition layer/silicone layer/polyurethane composition layer/silicone layer; a three-layered structure of other material layers (e.g., a layer comprised of paper, cloth, metal, other polymer etc.)/silicone layer/polyurethane composition layer; a three-layered structure of silicone layer/polyurethane composition layer/other material layer (e.g., a layer comprised of paper, cloth, metal, other polymer and the like); a five-layered structure of silicone layer/polyurethane composition layer/silicone layer/polyurethane composition layer/other material layer (e.g., a layer comprised of paper, cloth, metal, other polymer etc.) and the like.
When two or more polyurethane composition layers are present in one composite molded object, the two or more polyurethane composition layers may be polyurethane composition layers containing the same polyurethane (A) or polyurethane composition layers containing different polyurethane (A), as long as the layer is comprised of the polyurethane composition defined in the present invention.
In addition, when two or more silicone layers are present in one composite molded object, the two or more silicone layers may be comprised of the same polymer or different polymers.

The composite molded object of the present invention, wherein a polyurethane composition layer and a silicone layer are adhered and laminated, is not particularly limited as to the thickness of the whole composite molded object, the thickness of the polyurethane composition layer and the thickness of the silicone layer, and they may be adjusted according to the application of the composite molded object and the like.
In general, the thickness of the polyurethane composition layer (one layer) is desired to be not less than 10 $\mu$m, preferably 20 - 3,000 $\mu$m, more preferably 50 - 2,000 $\mu$m, and the thickness of the silicone layer (one layer) is desired to be not less than 10 $\mu$m, preferably 20 - 3,000 $\mu$m, more preferably 50 - 2,000 $\mu$m, from the aspects of easiness of production of the composite molded object, interlaminar adhesive force and the like.

Examples of silicone usable for the production of the aforementioned composite molded object include one formed by curing a curable silicone composition such as (i) an ordinary temperature curable silicone composition which is cured at ordinary temperature to be a silicone rubber or silicone resin, (ii) a heat curable silicone composition (e.g., methylvinylsilicone and the like), which is cured by heating to be a silicone rubber or silicone resin, and the like. Among the curable silicone compositions, an ordinary temperature curable silicone composition of the aforementioned (i), particularly an ordinary temperature curable silicone rubber composition, which is soft pasty or semisolid before curing and superior in handling properties, is preferably used from the aspect of workability.
The ordinary temperature curable silicone composition of the aforementioned (i) includes a one-component silicone composition which is cured by moisture in the air and a two-component silicone composition which is cured by a curing agent. Generally, a one-component ordinary temperature curable silicone composition shows adhesiveness to molding processing equipment and different materials. However, it is inferior in the release property and handling properties. In the present invention, therefore, a two-component ordinary temperature curable silicone composition, particularly a two-component ordinary temperature curable silicone rubber composition, which shows superior release property from different materials and superior handling properties, is preferably used.

The two-component ordinary temperature curable silicone composition is divided into 2 kinds of a condensation-reaction type and an addition-reaction type, depending on the functional group introduced into silicone.
In a condensation-reaction type, a hydroxyl group terminal reaction type diorganopolysiloxane and alkoxy group terminal reactive diorganopolysiloxane are polymerized with a catalyst such as a tin compound and the like. On the other hand, in an addition-reaction type, organopolysiloxane having an alkenyl group such as a vinyl group and the like is reacted with organohydrogenpolysiloxane having a hydrogen atom bonded to a silicon atom (hydrogenated polysiloxane) using a hydrosilylation catalyst such as a noble metal compound such as platinum, palladium, iridium, rhodium, osmium, ruthenium and the like, and the like at ordinary temperature or under heating (generally heated at a temperature of not more than 150°C).
In the present invention, as a curable silicone composition, the aforementioned addition-reaction type curable silicone composition is preferably used, since it is superior in the reactivity with the polyurethane composition of the present invention containing polyurethane (A) having structural unit (I) in a molecule, and a composite molded object having a polyurethane composition layer and a silicone layer can be produced smoothly. As the addition-reaction type curable silicone composition, ($\alpha$) a curable silicone composition containing organohydrogenpolysiloxane having a hydrogen

atom bonded to a silicon atom and a hydrosilylation catalyst; or (β) a curable silicone composition containing organohydrogenpolysiloxane having a hydrogen atom bonded to a silicon atom, organopolysiloxane having an alkenyl group and a hydrosilylation catalyst can be used.

Organohydrogenpolysiloxane used for the above-mentioned curable silicone compositions (α) and (β) may be any as long as it has one or more hydrogen atoms bonded to silicon atom in a molecule, and is not particularly limited. As organohydrogenpolysiloxane, diorganohydrogenpolysiloxane wherein one or more of the monovalent organic groups (organo groups) bonded to the silicon atom in the diorganopolysiloxane molecule is/are replaced with a hydrogen atom is preferably used, and dimethylhydrogenpolysiloxane wherein one or more, particularly 2 - 10, of methyl groups bonded to silicon atom in a dimethylpolysiloxane molecule is/are replaced with a hydrogen atom is more preferably used, from the aspects of flexibility, superior elastic property, availability, curability and the like.

The organopolysiloxane having an alkenyl group to be used for the curable silicone composition of the above-mentioned (β) may be any as long as it has one or more alkenyl groups such as a vinyl group, an allyl group, an acetylene group and the like in one molecule, and is not particularly limited. Among those, as the organopolysiloxane having an alkenyl group, organopolysiloxane having one or more alkenyl groups bonded to a silicon atom is preferably used, and dimethylpolysiloxane wherein one or more, particularly 2 - 10, of methyl groups bonded to silicon atom in a dimethylpolysiloxane molecule is/are replaced with an alkenyl group is more preferably used, from the aspects of flexibility, superior elastic property, availability, curability and the like.

The molecular weight of organohydrogenpolysiloxane to be used for the curable silicone compositions of the above-mentioned (α) and (β), and organopolysiloxane having an alkenyl group to be used for the curable silicone composition of the above-mentioned (β) is not particularly limited, and organohydrogenpolysiloxane suitable for the application and the like of the composite molded object having a polyurethane composition layer and a silicone layer of the present invention can be used.

The kind of the hydrosilylation catalyst to be used for the curable silicone compositions of the above-mentioned (α) and (β) is not particularly limited, and any hydrosilylation catalyst conventionally used can be adopted and, for example, a complex of noble metals such as platinum, palladium, iridium, rhodium, osmium, ruthenium and the like; organic peroxide; azo compound and the like can be mentioned. Among those, a platinum complex having high reactivity, which is superior in handling properties, particularly a platinum complex obtained by neutralizing an alcohol solution of chloroplatinic acid, a chloroplatinic acid solution and coordinating with an unsaturated aliphatic hydrocarbon group-containing compound and the like are preferably used.

The hydrosilylation catalyst content of the above-mentioned curable silicone compositions (α) and (β) is generally preferably about 1 ppm - about 1 mass%, particularly about 10 - 500 ppm, relative to the total mass organohydrogenpolysiloxane having a hydrogen atom bonded to a silicon atom and organopolysiloxane having an alkenyl group.

The production method of a composite molded object having at least one structure part wherein the polyurethane composition layer of the present invention and a silicone layer are adhered and laminated is not particularly limited and, for example, a method of producing a composite molded object comprising coating a molded object formed in advance by using the polyurethane composition of the present invention or a polyurethane composition layer of a composite comprising the polyurethane composition layer and other material with a curable silicone composition and curing the curable silicone composition; a method including placing (inserting) a member comprised of the polyurethane composition of the present invention in a mold, filling the mold with a curable silicone composition under melting and curing the curable silicone composition to allow adhesion and integration; a method including coextrusion molding a thermoplastic polyurethane composition and a thermoplastic curable silicone composition to allow adhesion, curing and integration and the like can be adopted.

When any of the above-mentioned methods is adopted, to obtain a composite molded object wherein a polyurethane composition layer is tightly joined with a silicone layer, it is preferable to cure a curable silicone composition on a layer comprised of a polyurethane composition to perform adhesion, lamination and integration of the polyurethane composition layer and the silicone layer.

Particularly, when the above-mentioned curable silicone composition (α) or (β) is used as a curable silicone composition, a method wherein the above-mentioned curable silicone composition (α) or (β) is applied to a layer comprised of the polyurethane composition of the present invention to form a continuous layer or a discontinuous layer, the curable silicone composition (α) or (β) is cured on the layer comprised of the polyurethane composition to produce a composite molded object wherein a silicone layer is laminated to form a continuous layer or a discontinuous layer on a layer comprised of a polyurethane composition is preferably adopted.

The discontinuous layer here means that the layer may contain a partially missing part, a part discontinuous in one direction and the like, and refers to a layer being not continuous.

The composite molded object of the present invention obtained as mentioned above can be used for various applications depending on the properties of a layer comprised of a polyurethane composition and a layer comprised of silicone, which constitute the composite molded object, and further on the quality, property and the like of other material layer constituting the composite molded object. Unlimitatively, for example, it can be used for automobile interior parts

such as instrument panel, center panel, center console box, door trim, pillar, assist grip, handle, air bag cover and the like; automobile exterior parts such as braid and the like; sweeper bumper, door stops of refrigerator, camera grip, electric machinery grip, household cooking device, remote control switch, various key tops of OA equipment, various key sheets used for push-button switch of cell phone, home electric appliance and the like, household appliance parts for housing and the like; sports goods such as swimming goggles and the like; various covers, various industrial components with a packing aiming at abrasion resistance, sealing property, sound insulating property, damping property and the like; electric or electronic parts and convenience goods such as curl cord electric cable cover, belt, hose, tube, sound deadening gear and the like, and the like.

In addition to the aforementioned properties of the polyurethane composition of the present invention in that it is superior in non-tacky, melt-moldability, and mechanical properties represented by abrasion resistance, tensile strength at break, tensile elongation at break and the like, as well as water resistance, bendability, oil resistance, elastic recovery property and the like, and shows a small permanent set, the polyurethane composition of the present invention shows low crystallization tendency due to the presence of structural unit (I) in a molecule of polyurethane (A) to be the base of the polyurethane composition. Therefore, it is extremely effective as a solventless ink binder and a high solid solvent ink binder. Hence, the present invention encompasses an ink binder comprising the polyurethane composition of the present invention and an ink composition containing the ink binder.

For preparation of a solvent ink binder by the use of the polyurethane composition of the present invention, any organic solvent conventionally used as an ink solvent can be used as an organic solvent, and the organic solvent is not particularly limited. For example, aromatic hydrocarbons such as toluene, xylene and the like; alcohols such as methanol, ethanol, isopropanol, n-butanol and the like; ketones such as acetone, methyl ethyl ketone, methyl isobutyl ketone and the like; esters such as ethyl acetate, butyl acetate and the like can be used. These organic solvents may be used alone or two or more kinds thereof may be used in a mixture.

Among these, alcohols and ketones are preferably used as the organic solvent from the aspects of handling properties, environmental adaptability and the like.

The solvent ink binder is not subject to any particular limitation as to the content of the polyurethane composition in the ink binder. From the aspects of workability during printing and the like, the viscosity of the ink binder is practically adjusted to fall within the range of 50 - 100,000 cps at 25˚C. A solvent ink binder having the aforementioned viscosity can be obtained by generally adjusting the content of the polyurethane composition in the ink binder to 5 - 80 mass%, preferably about 15 - 60 mass%.

The ink binder of the present invention may contain, where necessary, one or more kinds of the polymer compounds conventionally used as ink binders such as nitrocellulose, polyvinyl chloride, vinyl chloride·vinyl acetate copolymer, polyamide, acrylic acid ester-based polymer and the like.

A colorant such as pigment and the like, a solvent, and further, as necessary, a surfactant for ink flowability, modification of surface film and the like, wax, and other additives are appropriately blended with the ink binder of the present invention, and they are kneaded in a conventional ink production apparatus such as ball mill, attritor, sand mill and the like, whereby an ink composition is obtained.

In addition, the ink composition of the present invention can also be obtained as a two-component ink composition concurrently containing a polyisocyanate-based curing agent. As the polyisocyanate-based curing agent, the aforementioned organic polyisocyanate and the like, which can be used for the production of polyurethane (A), can be used. However, in view of the convenience of handling such as toxicity, pot life and the like, an isocyanate compound having a free isocyanate group, which is obtained from polyol having low molecular weight and an excess polyisocyanate compound, for example, triisocyanates synthesized from trimethylolpropane (1 mol) and diisocyanate (3 moles) such as 1,6-hexamethylene diisocyanate, tolylene diisocyanate, isophorone diisocyanate etc., and the like are preferably used.

The ink composition of the present invention obtained as mentioned above is superior in adhesion to silicone, and shows superior adhesiveness to films of polyester, nylon and the like. In addition, a print obtained by using the ink composition is superior to a print formed from conventional ink in various properties such as boiling resistance, retort resistance, surface strength, nonadhesiveness, oil resistance and the like.

## Examples

The present invention is explained in detail in the following by referring to Examples and the like, which are not to be construed as limitative.

In the following Examples and Comparative Examples, the measurement and evaluation of number average molecular weight of polymer polyol, number average molecular weight of polyurethane to be used for ink binder, melt viscosity of polyurethane composition, inherent viscosity of polyurethane, content of structural unit (I), nitrogen atom content and amine value of polyurethane, injection moldability of polyurethane composition (releasing condition from mold and surface condition of molded object) and extrusion moldability (production condition and surface condition of film), hardness and abrasion resistance of molded object obtained from polyurethane composition, adhesion to silicone (adhesive strength

between polyurethane composition layer and silicone layer in composite molded object), and adhesion between ink composition using polyurethane composition and silicone were performed according to the following methods.

(1) Number average molecular weight of polymer polyol:

It was calculated based on the hydroxyl value measured pursuant to JIS K-1557.

(2) Number average molecular weight of polyurethane used for ink binder:

A tetrahydrofuran (THF) solution with a concentration of polyurethane resin solid content of 0.1 mass% was prepared, and the number average molecular weight was measured by a GPC measuring apparatus (manufactured by TOSOH CORPORATION) under the following measurement conditions.
·column: Showdex GPC KF-806 (manufactured by Showa Denko K.K.) (two of which were connected in series and used)
·flow rate: THF 1.0 ml/min
·detector: RI detector

(3) Melt viscosity of polyurethane composition:

A polyurethane composition was dried under reduced pressure (not more than 10 torr) at 80˚C for 2 hrs, and the melt viscosity thereof was measured using a Koka flow tester (manufactured by SHIMADZU Corporation) under the conditions of load 490.3N (50 kgf), nozzle size=diameter 1 mmxlength 10 mm, temperature 200˚C.

(4) Inherent viscosity of polyurethane:

(i) N,N-Dimethylformamide (DMF) (200 ml) was added per 1 g of a polyurethane composition, and the mixture was stirred at room temperature for 24 hrs, and partitioned by filtration to recover a DMF solution. DMF was further added to the insoluble part, and the mixture was stirred for 1 hr, and partitioned by filtration. This operation was repeated three times, and the recovered filtrates were combined.
(ii) DMA was evaporated from the filtrate, and the residue was vacuum dried at room temperature for 24 hrs. The mass of the obtained polyurethane component was measured, and extraction of almost 100% of polyurethane contained in the polyurethane composition was confirmed. When the extraction rate was less than 100%, the unextracted part was considered to have been insoluble in DMF due to a sufficiently high molecular weight of polyurethane, and excluded from the inherent viscosity measurement objects.
(iii) The extracted polyurethane was dissolved in DMF to a concentration of 0.5 g/dl, and the flow time of the polyurethane solution at 30˚C was measured by an Ubbelohde viscometer. The inherent viscosity ($\eta_{inh}$) of polyurethane was determined from the following formula (1).

$$\text{Inherent viscosity } (\eta_{inh}) \text{ of polyurethane} = [\ln (t/t_0)]/c \qquad (1)$$

wherein t is flow time (sec) of polyurethane solution, $t_0$ is flow time (sec) of solvent (DMF), and c is concentration (g/dl) of polyurethane solution.

(5) Content of structural unit (I) in polyurethane:

Polyurethane was dissolved in deuterated DMSO, measured by a super conducting nuclear magnetic resonance apparatus (manufactured by JEOL Ltd. "Lambda500"), and the content of structural unit (I) was calculated.

(6) Nitrogen atom content of polyurethane:

According to an elemental analysis method using an ICP emission spectroscopy analyzer, a nitrogen atom content of polyurethane was measured.

(7) Amine value of polyurethane:

An amount of hydrochloric acid necessary for neutralizing an amino group contained in 1 g of polyurethane was measured by potentiometric titration, and the number of mg of potassium hydroxide (KOH) in an equivalent weight (equimolar) was taken.

(8) Injection moldability:

Using a mold with a mirror-finished surface, injection molding (cylinder temperature 190 - 210°C, mold temperature 35°C) was performed using the polyurethane compositions obtained in the following Examples 1 - 9 and Comparative Examples 1 - 3 to give disciform molded objects (diameter 120 mm, thickness 2 mm). The releasing state of the molded object from the mold and the surface condition of the molded object were observed and evaluated according to the criteria described below.

•<u>Evaluation criteria of injection moldability:</u>

O: The molded object is easily released from the mold, and the surface of the obtained molded object is smooth.
×: Adhesion between molded object and mold is high, requiring a lot of trouble over releasing, and deformation was confirmed on the surface of the obtained molded object.

(9) Extrusion moldability:

The polyurethane compositions obtained in the following Examples 1 - 9 and Comparative Examples 1 - 4 were extruded from a T-die extruder (25 mmϕ, cylinder temperature 180 - 200°C, dies temperature 200°C) onto a cooling roll at 30°C and cooled to give a film, and the film was wound at a winding rate of about 2 m/min. The condition of the film, as well as the surface condition of the wound film, was observed during the winding, and evaluated according to the criteria described below.

•<u>Evaluation of extrusion moldability:</u>

○: The extruded film is free of bad phenomenon such as fissure and the like, has a smooth surface and permits normal winding.
×: The extruded film shows bad phenomenon such as fissure and the like, and/or the surface smoothness is impaired.

(10) Hardness of molded object:

In the same manner as in the above-mentioned (8) (evaluation of injection moldability), disciform molded objects (diameter 120 mm, thickness 2 mm) were produced from the polyurethane compositions obtained in the following Examples 1 - 9 and Comparative Examples 1 - 3. Two of the disciform molded objects were laid on top of each other, and the shore hardness A of the molded object was measured pursuant to JIS K-6301.

(11) Abrasion resistance of molded object:

In the same manner as in the above-mentioned (8) (the evaluation of injection moldability), a disciform molded object (diameter 120 mm, thickness 2 mm) was produced from the polyurethane composition obtained from the following Examples 1 - 9 and Comparative Examples 1 - 3, the obtained molded object was left standing at 25°C for 2 days, and using a Taber abrasion testing machine (manufactured by DAITO ELECTRON CO., LTD., conditions: load 1 kg, abrasion ring H-22) measured abrasion loss pursuant to JIS K-7311.

(12) Adhesion to silicone (adhesion strength of polyurethane composition layer and silicone layer in composite molded object):

(i) The polyurethane compositions obtained in the following Examples 1 - 9 and Comparative Examples 1 - 4 were extruded from a T-die extruder (25 mmϕ, cylinder temperature 180 - 200˚C, dies temperature 200˚C) onto a cooling roll at 30˚C, cooled and wound to give 100 μm-thick films.

(ii) Test pieces (widthxlength=25 mm×100 mm) were cut out from the films obtained in the above-mentioned (I), and the following curable silicone liquid composition (1) or curable silicone liquid composition (2) was applied onto the test pieces to a thickness of about 200 μm. A test piece (widthxlength=25 mm×100 mm) cut out from the film obtained in the above-mentioned (i) was laminated on the coated curable silicone liquid composition, pressed 6 times with a cloth press roller to make the thickness of the liquid silicone uniform, and left in a hot air dryer at 100˚C for 1 hr to cure the curable silicone liquid composition, whereby a composite molded object having a three-layered structure of polyurethane composition layer/silicone layer/polyurethane composition was produced.

[In Examples 7 - 9 and Comparative Examples 1 - 3, only a composite molded object using curable silicone liquid composition (1) was produced.]

•Curable silicone liquid composition (1) :

A liquid mixture of liquid A and liquid B of "KE1950-70" (addition-reaction type curable silicone rubber composition) manufactured by Shin-Etsu Chemical Co., Ltd. at a mass ratio of 100:100 (Examples 1 - 6 and Comparative Examples 1 - 4), 100:200 (Example 7) or 100:300 (Examples 8 and 9) (JIS-A hardness of silicone rubber formed after curing=70)

•Curable silicone liquid composition (2) :

A liquid mixture of liquid A and liquid B of "TSE3351" (addition-reaction type curable silicone rubber composition) manufactured by Momentive Performance Materials Japan Inc. at a mass ratio of 100:100 (type E hardness of silicone rubber formed after curing=21)

(iii) Using the composite molded object having a three-layered structure obtained in the above-mentioned (ii) and "Instron 5566" manufactured by Instron Japan Co., Ltd., a 180˚ peeling test of the two outer layers (polyurethane composition layers) was performed assuming the intermediate silicone layer as an adhesive layer under the conditions of room temperature and tension speed of 50 mm/min. The resistance value to peeling of two outer layers was measured and taken as the adhesion strength.

In addition, after the aforementioned 180˚ peeling test, the state of the intermediate silicone layer was visually observed. When the silicone layer was destroyed, it was evaluated as "material failure", and when adhesion between the polyurethane composition layer and the silicone layer was extremely weak and the layer could be detached even with hand with ease was evaluated as "peeled".

(13) Adhesion between ink composition comprising polyurethane composition and silicone:

(i) The polyurethane composition obtained in the following Example 1 was extruded from a T-die extruder (25 mmϕ, cylinder temperature 180 - 200˚C, dies temperature 200˚C) onto a cooling roll at 30˚C, cooled and wound to give a film with thickness 100 μm.

(ii) A test piece (widthxlength=25 mm×100 mm) was cut out from the film obtained in the above-mentioned (i), and the ink composition obtained in the following Example 10 (ink composition comprising ink binder comprised of a polyurethane composition) was applied onto the test piece to a thickness of about 100 μm, and dried at 50˚C for 20 hrs to give a laminate of [ink composition layer]/[film layer comprised of polyurethane composition].

(iii) A curable silicone liquid composition (1) which is the same as that used in the above-mentioned (12) was applied onto the surface of the ink composition layer of the laminate obtained in the above-mentioned (ii) to a thickness of about 200 μm, and a test piece (widthxlength=25 mm×100 mm) cut out from the film obtained in the above-mentioned (i) was laminated thereon, pressed 6 times with a cloth press roller to make the thickness of the liquid silicone uniform, and left in a hot air dryer at 100˚C for 1 hr to cure the curable silicone liquid composition (1), whereby a laminate having a four-layered structure of [polyurethane composition layer (film layer)]/[silicone layer]/[ink composition layer]/[polyurethane composition layer (film layer)] was produced.

(iv) Using the laminate having a four-layered structure obtained in the above-mentioned (iii) and "Instron 5566"

manufactured by Instron Japan Co., Ltd., a 180° peeling test of two outer layers [polyurethane composition layers) (film layers)] was performed under the conditions of room temperature and tension speed of 50 mm/min. The resistance value to peeling of the two outer layers was measured and taken as the adhesion strength.

In addition, after the aforementioned 180° peeling test, the state of the inner silicone layer was visually observed. When the silicone layer was destroyed (ink composition layer was not destroyed), it was evaluated as "material failure".

Moreover, the abbreviations and contents relating to the compounds used in the following Examples and Comparative Examples are shown below.

<<Polyolefin polyol having structural unit (I) [polymer polyol ($a_p$-1)]>>

•POG-1:

Polymer having a hydroxyl group at both terminals, wherein butadiene is polymerized by a 1,2-bond (number average molecular weight 1,400, 1,2-vinyl bond content (proportion of 1,2-bond unit) 92 mol%, "G-1000" manufactured by Nippon Soda Co., Ltd.)

•POG-2:

Polymer having a hydroxyl group at both terminals, wherein butadiene is polymerized by a 1,2-bond (number average molecular weight 2,050, 1,2-vinyl bond content (proportion of 1,2-bond unit) 92 mol%, "G-2000" manufactured by Nippon Soda Co., Ltd.)

•POG-3:

Polymer having a hydroxyl group at both terminals,
wherein butadiene is polymerized by a 1,2-bond (number average molecular weight 3,100, 1,2-vinyl bond content (proportion of 1,2-bond unit) 92 mol%, "G-3000" manufactured by Nippon Soda Co., Ltd.)

<<Polymer polyol without structural unit (I) [other polymer polyol ($a_p$-2)]>>

•POH-1:

Polyester diol having a hydroxyl group number per molecule of 2.00 and a number average molecular weight of 3,500, which is produced by reacting 3-methyl-1,5-pentanediol with adipic acid.

•POH-2:

Polyester polyol having a hydroxyl group number per molecule of 3.00 and a number average molecular weight of 2,000, which is produced by reacting 3-methyl-1,5-pentanediol, trimethylolpropane and adipic acid.

•POH-3:

Polytetramethylene glycol having a hydroxyl group number per molecule of 2.00 and a number average molecular weight of 2,000.

•POH-4:

Polyester diol having a hydroxyl group number per molecule of 2.00 and a number average molecular weight of 1,000, which is produced by reacting 1,4-butanediol with adipic acid.

•POH-5:

Polyester diol having a hydroxyl group number per molecule of 2.00 and a number average molecular weight of 1,500, which is produced by reacting 3-methyl-1,5-pentanediol with adipic acid.

<<Organic polyisocyanate>>

- MDI: 4,4'-diphenylmethane diisocyanate
- IPDI: isophorone diisocyanate

<<Chain extender>>

- BD: 1,4-butanediol
- IPDA: isophoronediamine

<<urethanization reaction catalyst>>

- TI: tetraisopropyl titanate
- ZN: zinc neodecanoate
- BI: bismuth neodecanoate
- ZR: zirconium neodecanoate
- SN: dibutyltin diacetate

<<Quencher of urethanization reaction catalyst>>

•PH: distearyl phosphate

<<Example 1>>

(1)

(i) Polyolefin polyol (POG-1) having structural unit (I), which contains 30 ppm tetraisopropyl titanate (TI), polymer polyol (POH-1) without structural unit (I), which contains 10 ppm tetraisopropyl titanate (TI), 1,4-butanediol (BD, chain extender) and 4,4'-diphenylmethane diisocyanate (MDI) were continuously supplied to the front zone of the heating zone of a double-screw extruder (30 mmϕ, L/D=36; heating zone divided into three zones of front zone, central zone and rear zone) rotating in the coaxial direction, at a molar ratio of POG-1:POH-1:BD:MDI of 0.05:0.95:3.00:4.00 and the total supply of 200 g/min, and the mixture was continuously melt polymerized at 260°C to perform a polyurethane formation reaction.

(ii) Then, distearyl phosphate (PH) was added (supply amount: 0.002 g/min) to the rear zone of the above-mentioned double-screw extruder, and the obtained molten material was continuously extruded in a strand state into water, and cut with a pelletizer to give pellets. The pellets were dehumidified and dried at 80°C for 4 hr to give a polyurethane composition [hereafter to be referred to as "polyurethane composition (1)"].

(2) The melt viscosity of polyurethane composition (1) obtained in the above-mentioned (1), inherent viscosity of polyurethane to be the base of the polyurethane composition, the content of structural unit (I) and nitrogen atom content of polyurethane were determined by the above-mentioned methods. The results are as shown in the following Table 1.

(3)

(i) Using polyurethane composition (1) obtained in the above-mentioned (1), injection molding was performed by the above-mentioned method. The injection moldability was evaluated, and the hardness and abrasion resistance of the obtained molded object were measured by the above-mentioned methods. The results are shown in Table 1.

(ii) Using polyurethane composition (1) obtained in the above-mentioned (1), extrusion molding was performed by the above-mentioned method. The extrusion moldability was evaluated, and a composite molded object comprising a polyurethane composition layer and a silicone layer was produced using the obtained film and adhesion to silicone was measured or evaluated by the above-mentioned method. The results are shown in Table 1.

<<Examples 2 - 6>>

(1) In the same manner as in Example 1 except that polyolefin polyols (POG-1 - POG-3) having structural unit (I), which contains 30 ppm tetraisopropyl titanate (TI), polymer polyols (POH-1 - POH-4) without structural unit (I), which contain 10 ppm tetraisopropyl titanate (TI), 1,4-butanediol (BD, chain extender) and 4,4'-diphenylmethane diisocyanate (MDI) were used at the proportions shown in the following Table 1, polyurethane compositions (2) - (6) were produced.

(2) The melt viscosity of polyurethane compositions (2) - (6) obtained in the above-mentioned (1), inherent viscosity of polyurethane to be the base of the polyurethane composition, the content of structural unit (I) and nitrogen atom content of polyurethane were determined by the above-mentioned methods. The results are as shown in the following Table 1.

(3)

(i) Using polyurethane compositions (2) -(6) obtained in the above-mentioned (1), injection molding was performed by the above-mentioned method. The injection moldability was evaluated, and the hardness and abrasion resistance of the obtained molded objects were measured by the above-mentioned methods. The results are shown in Table 1.

(ii) Using polyurethane compositions (2) -(6) obtained in the above-mentioned (1), extrusion molding was performed by the above-mentioned method. The extrusion moldability was evaluated, and composite molded objects comprising a polyurethane composition layer and a silicone layer were produced using the obtained film and adhesion to silicone was measured or evaluated by the above-mentioned method. The results are shown in Table 1.

<<Comparative Example 1>>

(1)

(i) Polymer polyol (POH-4) without structural unit (I), which contains 10 ppm tetraisopropyl titanate (TI), 1,4-butanediol (BD, chain extender) and 4,4'-diphenylmethane diisocyanate (MDI) were continuously supplied to the front zone of the heating zone of a double-screw extruder (30 mmφ, L/D=36; heating zone divided into three zones of front zone, central zone and rear zone) rotating in the coaxial direction, at a molar ratio of POH-4:BD:MDI of 1.00:1.08:2.08 and the total supply of 200 g/min, and the mixture was continuously melt polymerized at 260˚C to perform a polyurethane formation reaction.

(ii) Then, distearyl phosphate (PH) was added (supply amount: 0.002 g/min) to the rear zone of the above-mentioned double-screw extruder, and the obtained molten material was continuously extruded in a strand state into water, and cut with a pelletizer to give pellets. The pellets were dehumidified and dried at 80˚C for 4 hr to give a polyurethane composition [hereafter to be referred to as "polyurethane composition (C1)"].

(2) The melt viscosity of polyurethane composition (C1) obtained in the above-mentioned (1), inherent viscosity of polyurethane to be the base of the polyurethane composition, the content of structural unit (I) and nitrogen atom content of polyurethane were determined by the above-mentioned methods. The results are as shown in the following Table 2.

(3)

(i) Using polyurethane composition (C1) obtained in the above-mentioned (1), injection molding was performed by the above-mentioned method. The injection moldability was evaluated, and the hardness and abrasion resistance of the obtained molded object were measured by the above-mentioned methods. The results are shown in Table 2.

(ii) Using polyurethane composition (C1) obtained in the above-mentioned (1), extrusion molding was performed by the above-mentioned method. The extrusion moldability was evaluated, and a composite molded object comprising a polyurethane composition layer and a silicone layer was produced using the obtained film and adhesion to silicone was measured or evaluated by the above-mentioned method. The results are shown in Table 2.

<<Comparative Example 2>>

(1)

(i) Polyolefin polyol (POG-1) having structural unit (I), which contains 30 ppm dibutyltin diacetate (SN), polymer polyol (POH-4) without structural unit (I), which contains 10 ppm dibutyltin diacetate (SN), 1,4-butanediol (BD, chain extender) and 4,4'-diphenylmethane diisocyanate (MDI) were continuously supplied to the front zone of the heating zone of a double-screw extruder (30 mmϕ, L/D=36; heating zone divided into three zones of front zone, central zone and rear zone) rotating in the coaxial direction, at a molar ratio of POG-1:POH-4:BD:MDI of 0.03:0.97:1.11:2.11 and the total supply of 200 g/min, and the mixture was continuously melt polymerized at 260˚C to perform a polyurethane formation reaction.
(ii) Then, distearyl phosphate (PH) was added (supply amount: 0.002 g/min) to the rear zone of the above-mentioned double-screw extruder, and the obtained molten material was continuously extruded in a strand state into water, and cut with a pelletizer to give pellets. The pellets were dehumidified and dried at 80˚C for 4 hr to give a polyurethane composition [hereafter to be referred to as "polyurethane composition (C2)"].

(2) The melt viscosity of polyurethane composition (C2) obtained in the above-mentioned (1), inherent viscosity of polyurethane to be the base of the polyurethane composition, the content of structural unit (I) and nitrogen atom content of polyurethane were determined by the above-mentioned methods. The results are as shown in the following Table 2.
(3)

(i) Using polyurethane composition (C2) obtained in the above-mentioned (1), injection molding was performed by the above-mentioned method. The injection moldability was evaluated, and the hardness and abrasion resistance of the obtained molded object were measured by the above-mentioned methods. The results are shown in Table 2.
(ii) Using polyurethane composition (C2) obtained in the above-mentioned (1), extrusion molding was performed by the above-mentioned method. The extrusion moldability was evaluated, and a composite molded object comprising a polyurethane composition layer and a silicone layer was produced using the obtained film and adhesion to silicone was measured or evaluated by the above-mentioned method. The results are shown in Table 2.

<<Comparative Example 3>>

(1)

(i) Polyolefin polyol (POG-1) having structural unit (I), which contains 30 ppm tetraisopropyl titanate (TI), polymer polyol (POH-4) without structural unit (I), which contains 10 ppm tetraisopropyl titanate (TI), 1,4-butanediol (BD, chain extender) and 4,4'-diphenylmethane diisocyanate (MDI) were continuously supplied to the front zone of the heating zone of a double-screw extruder (30 mmϕ, L/D=36; heating zone divided into three zones of front zone, central zone and rear zone) rotating in the coaxial direction, at a molar ratio of POG-1:POH-4:BD:MDI of 0.25:0.75:0.53:1.53 and the total supply of 200 g/min, and the mixture was continuously melt polymerized at 260˚C to perform a polyurethane formation reaction.
(ii) Then, distearyl phosphate (PH) was added (supply amount: 0.002 g/min) to the rear zone of the above-mentioned double-screw extruder, and the obtained molten material was continuously extruded in a strand state into water, and cut with a pelletizer to give pellets. The pellets were dehumidified and dried at 80˚C for 4 hr to give a polyurethane composition [hereafter to be referred to as "polyurethane composition (C3)"].

(2) The melt viscosity of polyurethane composition (C3) obtained in the above-mentioned (1), inherent viscosity of polyurethane to be the base of the polyurethane composition, the content of structural unit (I) and nitrogen atom content of polyurethane were determined by the above-mentioned methods. The results are as shown in the following Table 2.

(3)

(i) Using polyurethane composition (C3) obtained in the above-mentioned (1), injection molding was performed by the above-mentioned method. The injection moldability was evaluated, and the hardness and abrasion resistance of the obtained molded object were measured by the above-mentioned methods. The results are shown in Table 2.

(ii) Using polyurethane composition (C3) obtained in the above-mentioned (1), extrusion molding was performed by the above-mentioned method. The extrusion moldability was evaluated, and a composite molded object comprising a polyurethane composition layer and a silicone layer was produced using the obtained film and adhesion to silicone was measured or evaluated by the above-mentioned method. The results are shown in Table 2.

<<Comparative Example 4>>

(1) Using a mixture of polyurethane composition (C1) obtained in Comparative Example 1 (1) (97 parts by mass) and polyolefin polyol (POG-1) having structural unit (I) (3 parts by mass), extrusion molding was performed by the above-mentioned method. The extrusion moldability was evaluated, and a composite molded object comprising a polyurethane composition layer and a silicone layer was produced using the obtained film. However, a composite molded object wherein a mixture containing polyurethane composition (C1) is adhered to silicone could not be obtained. The results are shown in Table 2.

<<Example 7>>

(1)

(i) Polyolefin polyol (POG-1) having structural unit (I), which contains 30 ppm zinc neodecanoate (ZN), polymer polyol (POH-5) without structural unit (I), which contains 20 ppm zinc neodecanoate (ZN), 1,4-butanediol (BD, chain extender) and 4,4'-diphenylmethane diisocyanate (MDI) were continuously supplied to the front zone of the heating zone of a double-screw extruder (30 mmϕ, L/D=36; heating zone divided into three zones of front zone, central zone and rear zone) rotating in the coaxial direction, at a molar ratio of POG-1:POH-5:BD:MDI of 0.05:0.95:2.58:3.56 and the total supply of 200 g/min, and the mixture was continuously melt polymerized at 260˚C to perform a polyurethane formation reaction.

(ii) The obtained molten material was continuously extruded in a strand state into water, and cut with a pelletizer to give pellets. The pellets were dehumidified and dried at 80˚C for 4 hr to give a polyurethane composition [hereafter to be referred to as "polyurethane composition (7)"].

(2) The melt viscosity of polyurethane composition (7) obtained in the above-mentioned (1), inherent viscosity of polyurethane to be the base of the polyurethane composition, the content of structural unit (I) and nitrogen atom content of polyurethane were determined by the above-mentioned methods. The results are as shown in the following Table 3.

(3)

(i) Using polyurethane composition (7) obtained in the above-mentioned (1), injection molding was performed by the above-mentioned method. The injection moldability was evaluated, and the hardness and abrasion resistance of the obtained molded object were measured by the above-mentioned methods. The results are shown in Table 3.

(ii) Using polyurethane composition (7) obtained in the above-mentioned (1), extrusion molding was performed by the above-mentioned method. The extrusion moldability was evaluated, and a composite molded object comprising a polyurethane composition layer and a silicone layer was produced using the obtained film and adhesion to silicone was measured or evaluated by the above-mentioned method. The results are shown in

Table 3.

<<Example 8>>

(1) In the same manner as in Example 7 except that polyolefin polyol (POG-1) having structural unit (I), which contains 30 ppm bismuth neodecanoate (BI), polymer polyol (POH-5) without structural unit (I), which contains 20 ppm bismuth neodecanoate (BI), 1,4-butanediol (BD, chain extender) and 4,4'-diphenylmethane diisocyanate (MDI) were used at the proportion shown in the following Table 3, polyurethane composition (8) was produced.
(2) The melt viscosity of polyurethane composition (8) obtained in the above-mentioned (1), inherent viscosity of polyurethane to be the base of the polyurethane composition, the content of structural unit (I) and nitrogen atom content of polyurethane were determined by the above-mentioned methods. The results are as shown in the following Table 3.
(3)

(i) Using polyurethane composition (8) obtained in the above-mentioned (1), injection molding was performed by the above-mentioned method. The injection moldability was evaluated, and the hardness and abrasion resistance of the obtained molded object were measured by the above-mentioned methods. The results are shown in Table 3.
(ii) Using polyurethane composition (8) obtained in the above-mentioned (1), extrusion molding was performed by the above-mentioned method. The extrusion moldability was evaluated, and a composite molded object comprising a polyurethane composition layer and a silicone layer was produced using the obtained film and adhesion to silicone was measured or evaluated by the above-mentioned method. The results are shown in Table 3.

<<Example 9>>

(1) In the same manner as in Example 7 except that polyolefin polyol (POG-1) having structural unit (I), which contains 30 ppm zirconium neodecanoate (ZR), polymer polyol (POH-5) without structural unit (I), which contains 20 ppm zirconium neodecanoate (ZR), 1,4-butanediol (BD, chain extender) and 4,4'-diphenylmethane diisocyanate (MDI) were used at the proportion shown in the following Table 3, polyurethane composition (9) was produced.
(2) The melt viscosity of polyurethane composition (9) obtained in the above-mentioned (1), inherent viscosity of polyurethane to be the base of the polyurethane composition, the content of structural unit (I) and nitrogen atom content of polyurethane were determined by the above-mentioned methods. The results are as shown in the following Table 3.
(3)

(i) Using polyurethane composition (9) obtained in the above-mentioned (1), injection molding was performed by the above-mentioned method. The injection moldability was evaluated, and the hardness and abrasion resistance of the obtained molded object were measured by the above-mentioned methods. The results are shown in Table 3.
(ii) Using polyurethane composition (9) obtained in the above-mentioned (1), extrusion molding was performed by the above-mentioned method. The extrusion moldability was evaluated, and a composite molded object comprising a polyurethane composition layer and a silicone layer was produced using the obtained film and adhesion to silicone was measured or evaluated by the above-mentioned method. The results are shown in Table 3.

Table 1

| | Example | | | | | |
|---|---|---|---|---|---|---|
| | 1 | 2 | 3 | 4 | 5 | 6 |
| [raw material formulation for polyurethane composition] •polyolefin polyol having structural unit (I) kind molar ratio | POG-1 0.05 | POG-1 0.03 | POG-1 0.10 | POG-3 0.02 | POG-2 0.03 | POG-1 0.05 |
| ·polymer polyol without structural unit (I) kind molar ratio | POH-1 0.95 | POH-1 0.97 | POH-3 0.90 | POH-3 0.98 | POH-4 0.97 | POH-2/ POH-4 0.02/ 0.95 |
| ·molar ratio of chain extender (BD) | 3.00 | 4.08 | 2.46 | 3.64 | 1.89 | 1.19 |
| ·molar ratio of organic polyisocyanate (MDI) | 4.00 | 5.08 | 3.47 | 4.65 | 2.88 | 2.22 |
| ·urethanization reaction catalyst kind content based on mass of polyurethane (ppm) | TI 7.6 | TI 6.9 | TI 7.3 | TI 6.1 | TI 6.0 | TI 7.0 |
| ·quencher of urethanization reaction catalyst kind content based on mass of polyurethane (ppm) | PH 10 | PH 10 | PH 10 | PH 10 | PH 10 | PH 10 |
| [property of polyurethane composition (polyurethane)] content (mass%) of structural unit (I) | 1.4 | 0.8 | 4.3 | 1.6 | 2.9 | 3.7 |
| nitrogen atom content (mass%) | 2.4 | 2.8 | 3.2 | 3.7 | 4.2 | 3.6 |
| melt viscosity (Pa·s) | 1,300 | 1,600 | 2,500 | 4,500 | 1,800 | 2,200 |
| inherent viscosity (dl/g) | 0.98 | 1.02 | 0.99 | 1.03 | 1.01 | 1.25 |

(continued)

| | Example | | | | | |
|---|---|---|---|---|---|---|
| | 1 | 2 | 3 | 4 | 5 | 6 |
| injection moldability | ○ | ○ | ○ | ○ | ○ | ○ |
| hardness (JIS A) | 75 | 80 | 85 | 90 | 95 | 90 |
| abrasion resistance (abrasion loss) (mg) | 18 | 22 | 36 | 32 | 30 | 15 |
| extrusion moldability | ○ | ○ | ○ | ○ | ○ | ○ |
| adhesiveness [curable silicone liquid composition (1) was used] ·state of intermediate layer (silicone layer) ·adhesiveness (kg/cm) | material failure 3.5 | material failure 3.4 | material failure 3.5 | material failure 3.4 | material failure 3.5 | material failure 3.5 |
| adhesiveness [curable silicone liquid composition (2) was used] ·state of intermediate layer (silicone layer) ·adhesiveness (kg/cm) | material failure 0.2 | material failure 0.2 | material failure 0.2 | material failure 0.2 | material failure 0.2 | material failure 0.2 |

Table 2

| | Comparative Example | | | |
|---|---|---|---|---|
| | 1 | 2 | 3 | 41) |
| [raw material formulation for polyurethane composition] ·polyolefin polyol having structural unit (I) kind molar ratio | - 0 | POG-1 0.03 | POG-1 0.25 | - 0 |
| ·polymer polyol without structural unit (I) kind molar ratio | POH-4 1.00 | POH-4 0.97 | POH-4 0.75 | POH-4 1.00 |
| ·molar ratio of chain extender (BD) | 1.08 | 1.11 | 0.53 | 1.08 |
| ·molar ratio of organic polyisocyanate (MDI) | 2.08 | 2.11 | 1.53 | 2.08 |
| ·urethanization reaction catalyst kind content based on mass of polyurethane (ppm) | TI 6.2 | SN 6.7 | TI 11.8 | TI 6.2 |

(continued)

| | Comparative Example | | | |
|---|---|---|---|---|
| | 1 | 2 | 3 | 41) |
| ·quencher of urethanization reaction catalyst kind content based on mass of polyurethane (ppm) | PH 10 | PH 10 | PH 10 | PH 10 |
| [property of polyurethane composition (polyurethane)] content (mass%) of structural unit (I) | 0 | 2.4 | 21.0 | 0 |
| nitrogen atom content (mass%) | 3.6 | 3.6 | 2.8 | 3.6 |
| melt viscosity (Pa·s) | 1,300 | 1,600 | 1,300 | _2) |
| inherent viscosity (dl/g) | 1.00 | 0.98 | 0.95 | _2) |
| injection moldability | ○ | ○ | × | _2) |
| hardness (JIS A) | 90 | 90 | 80 | _2) |
| abrasion resistance (abrasion loss) (mg) | 18 | 20 | 80 | _2) |
| extrusion moldability | ○ | ○ | × | × |
| adhesiveness [curable silicone liquid composition (1) was used] ·state of intermediate layer (silicone layer) •adhesiveness (kg/cm) | peeled - | peeled - | material failure 3.5 | peeled - |
| 1) A mixture of the polyurethane composition obtained in Comparative Example 1 (97 parts by mass) and polyolefin polyol (POG-1) having structural unit (I) (3 parts by mass) was used.<br>2) not measured or evaluated. | | | | |

Table 3

| | Example | | |
|---|---|---|---|
| | 7 | 8 | 9 |
| [raw material formulation for polyurethane composition] ·polyolefin polyol having structural unit (I) kind molar ratio | POG-1 0.05 | POG-1 0.05 | POG-1 0.05 |
| ·polymer polyol without structural unit (I) kind molar ratio | POH-5 0.95 | POH-5 0.95 | POH-5 0.95 |
| ·molar ratio of chain extender (BD) | 2.58 | 2.58 | 2.58 |
| ·molar ratio of organic polyisocyanate (MDI) | 3.56 | 3.56 | 3.56 |
| ·urethanization reaction catalyst kind based on mass of content based on mass of polyurethane (ppm) | ZN 11.7 | BI 11.7 | ZR 11.7 |
| ·quencher of urethanization reaction catalyst kind catalyst content based on mass of polyurethane (ppm) | not used - | not used - | not used - |
| [property of polyurethane composition (polyurethane)] content (mass%) of structural unit (I) | 2.5 | 2.5 | 2.5 |
| nitrogen atom content (mass%) | 3.8 | 3.8 | 3.8 |
| melt viscosity (Pa·s) | 1,200 | 1,700 | 1,000 |
| inherent viscosity (dl/g) | 0.71 | 0.74 | 0.70 |
| injection moldability | ○ | ○ | ○ |
| hardness (JIS A) | 90 | 89 | 89 |
| abrasion resistance (abrasion loss) (mg) | 45 | 35 | 50 |

(continued)

| | Example | | |
|---|---|---|---|
| | 7 | 8 | 9 |
| extrusion moldability | ○ | ○ | ○ |
| adhesiveness [curable silicone liquid composition (1) was used] was use state of intermediate layer (silicone layer) adhesiveness (kg/cm) | material failure 1.7 | material failure 2.5 | material failure 2.2 |

As is clear from the results shown in the above-mentioned Tables 1 and 3, the polyurethane compositions (1) - (9) obtained in Examples 1 - 9 contain, in a molecule of polyurethane to be the base of the polyurethane composition, structural unit (I) in a proportion of 0.1 - 20 mass% based on the mass of polyurethane, and were produced by using, as a urethanization reaction catalyst, an organotitanium compound, an organozinc compound, an organobismuth compound or an organozirconium compound in a proportion of 0.1 - 2,000 ppm based on the mass of polyurethane (A). Since the urethanization reaction catalyst contained in the polyurethane composition is an organotitanium compound, an organozinc compound, an organobismuth compound or an organozirconium compound, the compositions are nonadhesive, easily released from a mold during injection molding. Moreover, the obtained molded object has a smooth surface, and is superior in injection moldability. When extrusion molded, the film is free of a bad phenomenon such as fissure and the like, has a smooth surface, can be wound normally, is superior in extrusion moldability, has appropriate hardness, is superior in flexibility and elasticity, shows small abrasion loss, is superior in abrasion resistance, tightly adheres to silicone, and is superior in adhesion to silicone.

In contrast, in the polyurethane composition of Comparative Example 1, polyurethane to be the base of the polyurethane composition does not have structural unit (I) in a molecule. Therefore, when a composite molded object having a polyurethane composition layer and a silicone layer is produced, adhesion strength between the polyurethane composition layer and the silicone layer is extremely low, the silicone layer is easily peeled off with hand, and the polyurethane composition layer is inferior in adhesion to silicone.

In addition, the polyurethane composition of Comparative Example 2 contains, in a molecule of polyurethane to be the base of the polyurethane composition, structural unit (I) in a proportion of 0.1 - 20 mass% based on the mass of polyurethane. However, it was produced by the use of an organotin compound as an urethanization reaction catalyst, and does not contain metal compound (B) in the polyurethane composition. Therefore, when a composite molded object having a polyurethane composition layer and a silicone layer is produced, adhesion strength between the polyurethane composition layer and the silicone layer is extremely low, the silicone layer is easily peeled off with hand, and the polyurethane composition layer is inferior in adhesion to silicone.

Furthermore, the polyurethane composition of Comparative Example 3 contains structural unit (I) in a molecule of polyurethane to be the base of the polyurethane composition. However, since the content exceeds 20 mass%, the adhesiveness is high even though an organotitanium compound was used as an urethanization reaction catalyst for production, and the composition cannot be released easily from a mold after injection molding. The obtained molded object has a deformed surface, and after extrusion molding, the film shows a bad phenomenon such as fissure and the like as well as roughened surface and the like. The polyurethane composition is inferior in extrusion moldability, and the molded object shows high abrasion loss and is inferior in abrasion resistance.

In addition, since the polyurethane composition of Comparative Example 4 is a mixture of the polyurethane composition obtained in Comparative Example 1, which contains, as the base of the composition, polyurethane free of structural unit (I) in a molecule, and polyolefin polyol having structural unit (I) in a molecule, a composite molded object wherein a polyurethane composition layer and a silicone layer are adhered cannot be obtained, and the polyurethane composition layer is greatly inferior in adhesion to silicone.

<<Example 10>>

(1) Preparation of ink binder:

(i) Polyolefin polyol (POG-1) having structural unit (I), which contains 30 ppm tetraisopropyl titanate (TI) (7.0 parts by mass), polymer polyol (POH-1) without structural unit (I), which contains 10 ppm tetraisopropyl titanate (TI) (332.5 parts by mass), and isophorone diisocyanate (IPDI, 44.6 parts by mass) were charged in a round-bottom flask equipped with a stirrer and a thermometer, homogeneously mixed, and reacted at 80˚C for 4 hr

under a nitrogen stream to give a prepolymer having an isocyanate group at the terminal.

(ii) Methylethylketone (717 parts by mass) was added to the prepolymer obtained in the above-mentioned (i) and the prepolymer was homogeneously dissolved. A chain extender solution obtained by dissolving isophoronediamine (14.5 parts by mass) in isopropanol (213 parts by mass) was added to perform chain extension to give a polyurethane solution having a solid content concentration (polyurethane concentration) of 30 mass% and viscosity of 1,000 cP/25˚C [hereafter to be referred to as an "ink binder"]. The polyurethane obtained here had a number average molecular weight of 16,800, and an amine value per 1 g of polyurethane of 0.2 KOH mg/g.

(2) Preparation of ink composition:

The ink binder obtained in the above-mentioned (1) (100 parts by mass), titanium oxide ("Tipaque R-550" manufactured by Ishihara Sangyo Kaisha, Ltd., 75 parts by mass), ethyl acetate (50 parts by mass), and isopropanol (50 parts by mass) were kneaded in a compact ball mill for 24 hr to give an ink composition.

(3) Using the ink composition obtained in the above-mentioned (2), the adhesion between the ink composition and silicone was evaluated by the above-mentioned method. As a result, a layer formed from the ink composition containing an ink binder comprised of a polyurethane composition and the silicone layer were tightly adhered in the interface, and the silicone layer was destroyed in a 180˚ peeling test to be evaluated as "material failure", and moreover, the adhesion strength upon peeling was as high as 3.5 kg/cm.

Industrial Applicability

The polyurethane composition of the present invention is nonadhesive, does not adhere to molding apparatus, mold and the like, is superior in handling properties, and superior in melt-moldability, and can produce various molded objects having superior appearance smoothly and at high producibility according to any molding method such as injection molding, extrusion molding, inflation molding, blow molding, calender molding, press molding, casting and the like. Moreover, although the composition is nonadhesive, it is superior in adhesion to silicone, strongly adheres to silicone even without a surface activation treatment (primer treatment etc.) in advance, and can smoothly produce a composite molded object having a polyurethane layer and a silicone layer. Moreover, an ink composition containing the polyurethane composition of the present invention as an ink binder is nonadhesive, superior in abrasion resistance, surface strength, oil resistance and the like, superior in adhesion to silicone substrate and other substrate even without a previous surface activation treatment (primer treatment etc.) even though the composition is nonadhesive, and can form a good printing surface. Therefore, the composition can be effectively used for various applications.

## Claims

**1.** A polyurethane composition comprising polyurethane (A) comprising, in a molecule, a structural unit (I) represented by the following formula (I);

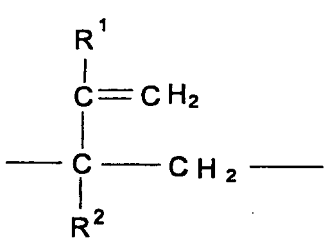

(I)

wherein $R^1$ and $R^2$ are each independently a hydrogen atom or an alkyl group having a carbon number of 1 - 6, in a proportion of 0.1 - 20 mass% based on the mass of polyurethane, and at least one kind of metal compound (B) selected from an organozinc compound, an organobismuth compound, an organotitanium compound and an organozirconium compound, wherein the content of metal compound (B) is 0.1 - 2,000 ppm based on the mass of polyurethane (A).

**2.** The polyurethane composition according to claim 1, further comprising at least one kind of compound (C) selected from a phosphorus compound and a phenolic compound in a proportion of 1 - 20,000 ppm based on the mass of

polyurethane (A).

3. The polyurethane composition according to claim 1 or 2, which does not contain an organotin compound and tertiary amines.

4. The polyurethane composition according to any one of claims 1 to 3, wherein polyurethane (A) is at least one kind of polyurethane selected from

- polyurethane (A1) containing structural unit (I) in a proportion of 0.1 - 20 mass% based on the mass of polyurethane, which is formed by reacting polymer polyol ($a_p$) containing, at least as a part of the polymer polyol component, polymer polyol ($a_p$-1) containing structural unit (I) represented by the above-mentioned formula (I) in a molecule with organic polyisocyanate (b); and
- polyurethane (A2) containing structural unit (I) in a proportion of 0.1 - 20 mass% based on the mass of polyurethane, which is formed by reacting polymer polyol ($a_p$) containing, at least as a part of the polymer polyol component, polymer polyol ($a_p$-1) containing structural unit (I) represented by the above-mentioned formula (I) in a molecule with organic polyisocyanate (b) and a chain extender (c).

5. The polyurethane composition according to claim 4, wherein the polymer polyol ($a_p$-1) is polyolefin polyol.

6. The polyurethane composition according to claim 4 or 5, wherein the polymer polyol ($a_p$-1) is at least one kind selected from polybutadiene polyol, polyisoprene polyol and butadiene/isoprene copolymer polyol.

7. The polyurethane composition according to any one of claims 1 to 6, wherein polyurethane (A) has a nitrogen atom content of 1 - 6 mass%.

8. The polyurethane composition according to any one of claims 1 to 7, wherein polyurethane (A) has an inherent viscosity of 0.5 - 1.5 dl/g.

9. A production method of the polyurethane composition according to claim 1, comprising reacting polymer polyol ($a_p$) comprising polymer polyol ($a_p$-1) having, in a molecule, a structural unit (I) represented by the following formula (I);

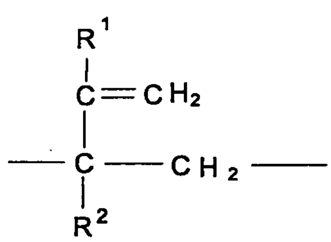

(I)

wherein $R^1$ and $R^2$ are each independently a hydrogen atom or an alkyl group having a carbon number of 1 - 6, at least as a part of the polymer polyol component, with organic polyisocyanate (b) using or without using a chain extender (c), in the presence of at least one kind of metal compound (B) selected from an organozinc compound, an organobismuth compound, an organotitanium compound and an organozirconium compound in a proportion of 0.1 - 2,000 ppm based on the total mass of polymer polyol ($a_p$) and organic polyisocyanate (b), or the total mass of polymer polyol ($a_p$), organic polyisocyanate (b) and chain extender (c).

10. The production method according to claim 9, wherein the polyurethane formation reaction is performed in the absence of an organotin compound and tertiary amines.

11. The production method according to claim 9 or 10, wherein compound (C) which is at least one kind selected from a phosphorus compound and a phenolic compound is added at a proportion of 1 - 20,000 ppm based on the mass of polyurethane after the polyurethane formation reaction.

12. A molded object comprised of the polyurethane composition according to any one of claims 1 to 8.

13. A composite molded object comprising a layer comprising the polyurethane composition of according to any one of

claims 1 to 8 and a silicone layer laminated thereon.

**14.** The composite molded object according to claim 13, wherein the silicone layer is formed by curing a curable silicone composition on the layer comprising the polyurethane composition.

**15.** The composite molded object according to claim 14, wherein the curable silicone composition is a curable silicone composition comprising organohydrogenpolysiloxane having a hydrogen atom bonded to a silicon atom and a hydrosilylation catalyst, or a curable silicone composition comprising organohydrogenpolysiloxane having a hydrogen atom bonded to a silicon atom, organopolysiloxane having an alkenyl group and a hydrosilylation catalyst.

**16.** A production method of a composite molded object wherein a silicone layer is laminated on a layer comprised of a polyurethane composition, comprising applying a curable silicone composition containing organohydrogenpolysiloxane having a hydrogen atom bonded to a silicon atom and a hydrosilylation catalyst onto a layer comprising the polyurethane composition of according to any one of claims 1 to 8 to form continuous layers or discontinuous layers, or applying a curable silicone composition containing organohydrogenpolysiloxane having a hydrogen atom bonded to a silicon atom, organopolysiloxane having an alkenyl group and a hydrosilylation catalyst onto a layer comprising the polyurethane composition according to any one of claims 1 to 8 to form continuous layers or discontinuous layers, and curing the curable silicone composition on the layer comprising the polyurethane composition.

**17.** An ink binder comprising the polyurethane composition according to any one of claims 1 to 8.

**18.** The ink binder according to claim 17, wherein polyurethane (A) has an amine value per 1 g thereof of not more than 0.5 KOH mg/g.

**19.** An ink composition comprising the ink binder according to claim 17 or 18.

## INTERNATIONAL SEARCH REPORT

International application No.
PCT/JP2008/069194

A. CLASSIFICATION OF SUBJECT MATTER
*C08L75/14*(2006.01)i, *B32B27/40*(2006.01)i, *C08G18/67*(2006.01)i, *C08K3/10*(2006.01)i, *C08K3/32*(2006.01)i, *C08K5/13*(2006.01)i, *C09D11/10*(2006.01)i

According to International Patent Classification (IPC) or to both national classification and IPC

B. FIELDS SEARCHED

Minimum documentation searched (classification system followed by classification symbols)
C08L1/00-101/16, B32B27/40, C08G18/00-87, C08K3/00-5/59, C09D4/00-201/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-26758 A (Sanyu Rec Co., Ltd.), 29 January, 2003 (29.01.03), Claims 1 to 3 (Family: none) | 1-19 |
| A | JP 4-41573 A (Seikoh Chemicals Co., Ltd.), 13 February, 1992 (13.02.92), Claims 1, 2 (Family: none) | 1-19 |
| A | JP 5-269927 A (Kinyosha Co., Ltd.), 19 October, 1993 (19.10.93), Claim 1; Par. No. [0021] (Family: none) | 1-19 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 January, 2009 (20.01.09) | 03 February, 2009 (03.02.09) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/069194

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-330451 A (Toyo Tire and Rubber Co., Ltd.), 15 December, 1998 (15.12.98), Claims 1 to 9; Par. Nos. [0043], [0049] (Family: none) | 1-19 |
| A | JP 10-81728 A (San-Yu Resin Kabushiki Kaisha), 31 March, 1998 (31.03.98), Claims 1 to 6; Par. No. [0057] & US 5958594 A & EP 940417 A1 | 1-19 |
| A | JP 8-302181 A (Dainichiseika Color & Chemicals Mfg. Co., Ltd.), 19 November, 1996 (19.11.96), Claims 1 to 7 (Family: none) | 1-19 |
| A | JP 2001-100489 A (Bando Chemical Industries, Ltd.), 13 April, 2001 (13.04.01), Claims 1, 2; Par. Nos. [0015], [0025] (Family: none) | 1-19 |
| A | JP 2005-247878 A (Konishi Co., Ltd.), 15 September, 2005 (15.09.05), Claims 1 to 5; Par. No. [0038] (Family: none) | 1-19 |
| A | JP 2005-338460 A (Bridgestone Corp.), 08 December, 2005 (08.12.05), Claims 1 to 4; Par. Nos. [0035], [0040] (Family: none) | 1-19 |
| A | JP 2006-348278 A (Showa Denko Kabushiki Kaisha), 28 December, 2006 (28.12.06), Claims 1 to 24; Par. No. [0092] & EP 1899397 A & WO 2006/123804 A1 | 1-19 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001026648 A
- JP 2002206071 A
- JP 2001026748 A
- JP 8174604 A